# EUROPEAN PATENT APPLICATION

(11) **EP 1 714 768 A1**
(43) Date of publication of application: **25.10.2006**
(21) Application number: 05710012.5
(22) Date of filing: 09.02.2005
(51) Int. Cl.: B29C 45/28, B29C 45/76

(54) **INJECTION MOLDING MACHINE**

(30) Priority: 10.02.2004 JP 2004033520; 10.02.2004 JP 2004033645
(71) Applicant: SUMITOMO HEAVY INDUSTRIES, LTD., Shinagawa-ku, Tokyo 141-8686 (JP)
(72) Inventor: KUZUMI, Shunshi, c/o Sumitomo Heavy Industries Ltd, Tokyo 141-8686 (JP)
(74) Representative: Geyer, Ulrich F.
(86) International application number: PCT/JP2005/001960
(87) International publication number: WO 2005/075174

(57) **Abstract**

An object is to charge resin into cavities in accordance with molding conditions individually set for the cavities by controlling valve gates disposed within a mold apparatus or a mold support apparatus by use of a controller, to produce individual molded products under optimal molding conditions, to produce molded products having no variation in molding accuracy and quality, and to lower the cost of the mold apparatus. For such a purpose, an injection molding machine includes a plurality of cavities formed in a mold apparatus; resin passages for charging resin into the cavities; a plurality of selection means respectively disposed in the resin passages corresponding to the cavities and adapted to selectively open and close the corresponding resin passages; and a controller for controlling the selection means.

## Description

### TECHNICAL FIELD

The present invention relates to an injection molding machine.

### BACKGROUND ART

Conventionally, in an injection molding machine, resin heated and melted in a heating cylinder is injected under high pressure by means of advancing a screw within the heating cylinder, and is charged into a cavity of a mold apparatus. The molten resin is then cooled and solidified within the cavity so as to obtain a molded product. In order to improve productivity of such an injection molding machine, there has been performed double-cavity molding or multicavity molding, which enables production of a plurality of molded products in a single molding cycle (see, for example, Patent Documents 1 and 2).

In this case, a plurality of cavities are formed in a mold apparatus, and injected resin is distributed and charged into the plurality of cavities via a sprue and a runner. Therefore, a plurality of molded products can be simultaneously produced in a single molding cycle, and thus, productivity of an injection molding machine can be improved. Patent Document 1: Japanese Patent Application Laid-Open (kokai) No. H7-171888.
Patent Document 2: Japanese Patent Application Laid-Open (kokai) No. H8-118403.

### DISCLOSURE OF THE INVENTION

### PROBLEMS TO BE SOLVED BY THE INVENTION

However, in the conventional injection molding machine, molding conditions are changed with the shape of molded products. Therefore, when a plurality of molded products having different shapes are to be provided, a plurality of injection molding machines are installed so as to perform molding operations under molding conditions suitable for respective shapes. However, installment of a plurality of injection molding machines requires a large space in a molding plant. Further, since the injection molding machines differ from one another in terms molding conditions, molded products produced through a short molding cycle must be stocked within the plant, so that a larger space must be prepared.

An object of the present invention is to solve the above-mentioned problems in the conventional injection molding machine and to provide an injection molding machine which can charge resin into cavities in accordance with molding conditions individually set for the cavities by controlling valve gates disposed within a mold apparatus or a mold support apparatus by use of a controller, which can produce individual molded products under optimal molding conditions, which can produce molded products having no variation in molding accuracy and quality, and which can lower the cost of the mold apparatus.

### MEANS FOR SOLVING THE PROBLEMS

To achieve the above object, an injection molding machine of the present invention comprises a plurality of cavities formed in a mold apparatus; resin passages for charging resin into the cavities; a plurality of selection means respectively disposed in the resin passages corresponding to the cavities and adapted to selectively open and close the corresponding resin passages; and a controller for controlling the selection means.

In another injection molding machine of the present invention, the controller opens and closes the plurality of selection means in accordance with respective molding conditions of the cavities.

In still another injection molding machine of the present invention, the controller controls timings at which the respective selection means are opened and closed, such that charging of resin, or pressure-holding or cooling of the charged resin is completed simultaneously at a cavity having a large shot volume and a cavity having a small shot volume.

In still another injection molding machine of the present invention, an injection apparatus for supplying resin is further provided, wherein, in a single metering step, the injection apparatus meters resin to be charged into all the cavities.

In still another injection molding machine of the present invention, an injection apparatus for supplying resin is further provided, wherein, in a plurality of metering steps, the injection apparatus meters resin to be charged into all the cavities.

In still another injection molding machine of the present invention, the mold apparatus includes a stationary mold, a movable mold, and an intermediate mold, wherein the cavities are formed between the intermediate mold and the stationary mold and between the intermediate mold and the movable mold, and the controller controls the injection molding machine such that mold closing, mold clamping, and mold opening between the intermediate mold and the stationary mold are performed independently of mold closing, mold clamping, and mold opening between the intermediate mold and the movable mold.

In still another injection molding machine of the present invention, the mold opening between the intermediate mold and the stationary mold and the mold opening between the intermediate mold and the movable mold are performed alternately.

Still another injection molding machine of the present invention further comprises a stationary-mold support apparatus; a first movable-mold support apparatus movable in relation to the stationary-mold support apparatus; and a second movable-mold support apparatus which is disposed between the stationary-mold support apparatus and the first movable-mold support apparatus and to which are attached corresponding ones of two pairs of mutually facing molds that form cavities.

Still another injection molding machine of the present invention further comprises a first mold apparatus composed of a pair of molds attached to the stationary-mold support apparatus and the second movable-mold support apparatus, respectively, and a second mold apparatus composed of a pair of molds attached to the first movable-mold support apparatus and the second movable-mold support apparatus, respectively, wherein mold closing, mold clamping, and mold opening of the first mold apparatus are performed independently of mold closing, mold clamping, and mold opening of the second mold apparatus.

Still another injection molding machine of the present invention further comprises a drive apparatus for the second movable-mold support apparatus which moves the second movable-mold support apparatus independently of the first movable-mold support apparatus.

In still another injection molding machine of the present invention, the drive apparatus for the second movable-mold support apparatus is attached to the second movable-mold support apparatus.

In still another injection molding machine of the present invention, the drive apparatus for the second movable-mold support apparatus is attached to the stationary-mold support apparatus or the first movable-mold support apparatus.

In still another injection molding machine of the present invention, the selection means are disposed in the mold apparatus.

In still another injection molding machine of the present invention, the selection means are disposed at least in the stationary mold or the intermediate mold.

In still another injection molding machine of the present invention, the second movable-mold support apparatus moves along tie bars disposed to extend between the stationary-mold support apparatus and the first movable-mold support apparatus.

In still another injection molding machine of the present invention, the second movable-mold support apparatus moves along guide means attached to a frame.

In still another injection molding machine of the present invention, the second movable-mold support apparatus includes selection means for selecting the resin passages corresponding to the cavities.

In still another injection molding machine of the present invention, the selection means are a plurality of shutoff means.

In still another injection molding machine of the present invention, the shutoff means are controlled at arbitrary timings.

In still another injection molding machine of the present invention, molded products are produced in accordance with the respective molding conditions of the cavities.

In still another injection molding machine of the present invention, an ejector apparatus is disposed on the stationary-mold support apparatus and the first movable-mold support.

The present invention also provides an injection molding method for producing a first molded product in a first cavity formed between a stationary mold and an intermediate mold and producing a second molded product, which differs in shape from the first molded product, in a second cavity formed between the intermediate mold and a movable mold, the method comprising charging resin into one cavity at a first timing via a resin passage in the intermediate mold; controlling the resin passage by means of selection means provided within the intermediate mold so as to establish communication between the resin passage and the other cavity; and charging the resin into the other cavity at a second timing via the resin passage in the intermediate mold.

The present invention also provides an injection molding method for producing a first molded product by use of a first mold apparatus disposed between a first movable-mold support apparatus and a second movable-mold support apparatus, and producing a second molded product by use of a second mold apparatus disposed between the second movable-mold support apparatus and a stationary-mold support apparatus, the method comprising charging resin at a first timing into a first cavity formed in the first mold apparatus via a resin passage in the second movable-mold support apparatus; and charging resin at a second timing into a second cavity formed in the second mold apparatus via the resin passage in the second movable-mold support apparatus.

### EFFECTS OF THE INVENTION

According to the present invention, valve gates provided in a mold apparatus or a mold support apparatus are controlled by means of a controller. Therefore, resin can be charged in accordance with molding conditions of each cavity, so that each molded product can be produced under optimal molding conditions, molded products having no variation in molding accuracy and quality can be produced, and the cost of the mold apparatus can be lowered.

### BRIEF DESCRIPTION OF THE DRAWINGS

FIG. 1 is a schematic view of an injection molding machine according to a first embodiment of the present invention.
FIG. 2 is a pair of charts showing a first operation sequence of the injection molding machine according to the first embodiment of the present invention.
FIG. 3 is a pair of charts showing a second operation sequence of the injection molding machine according to the first embodiment of the present invention.
FIG. 4 is a pair of charts showing a third operation sequence of the injection molding machine according to the first embodiment of the present invention.
FIG. 5 is a pair of charts showing a fourth operation sequence of the injection molding machine according to the first embodiment of the present invention.
FIG. 6 is a schematic view of an injection molding machine according to a second embodiment of the present invention.
FIG. 7 is a view showing a modification of a stack mold apparatus of the injection molding machine according to the second embodiment of the present invention.
FIG. 8 is a pair of charts showing a first operation sequence of the injection molding machine according to the second embodiment of the present invention.
FIG. 9 is a pair of charts showing a second operation sequence of the injection molding machine according to the second embodiment of the present invention.
FIG. 10 is a schematic view of an injection molding machine according to a third embodiment of the present invention.
FIG. 11 is a pair of charts showing a first operation sequence of the injection molding machine according to the third embodiment of the present invention.
FIG. 12 is a pair of charts showing a second operation sequence of the injection molding machine according to the third embodiment of the present invention.
FIG. 13 is a pair of charts showing a third operation sequence of the injection molding machine according to the third embodiment of the present invention.
FIG. 14 is a pair of charts showing a fourth operation sequence of the injection molding machine according to the third embodiment of the present invention.
FIG. 15 is a pair of charts showing a fifth operation sequence of the injection molding machine according to the third embodiment of the present invention.
FIG. 16 is a pair of charts showing a sixth operation sequence of the injection molding machine according to the third embodiment of the present invention.
FIG. 17 is a schematic view of an injection molding machine according to a fourth embodiment of the present invention.
FIG. 18 is a schematic view of an injection molding machine according to a fifth embodiment of the present invention.

### DESCRIPTION OF REFERENCE NUMERALS

- 11, 111, 211:: injection apparatus
- 18:: controller
- 43:: mold apparatus
- 44, 132, 231:: stationary mold
- 45, 133, 234:: movable mold
- 47a, 95a, 95b, 95e, 234a:: first cavity
- 47b, 95c, 95d, 95f, 231a:: second cavity
- 48, 96, 240:: sprue
- 48a, 96a, 96b, 96e:: first runner
- 48b, 96c, 96d, 96f:: second runner
- 49a, 97a, 97b, 97e:: first valve gate
- 49b, 97c, 97d, 97f:: second valve gate
- 53, 130, 230:: tie bar
- 71, 227,228:: ejector apparatus
- 135:: intermediate mold
- 212:: molding machine frame
- 221:: stationary platen
- 222:: second movable platen
- 223:: first movable platen
- 232:: stationary-side intermediate mold
- 232a:: second mold runner
- 233:: movable-side intermediate mold
- 233a:: first mold runner
- 236:: intermediate-member drive apparatus
- 241:: intermediate runner
- 242:: valve gate

### BEST MODE FOR CARRYING OUT THE INVENTION

Embodiments of the present invention will next be described in detail with reference to the drawings.

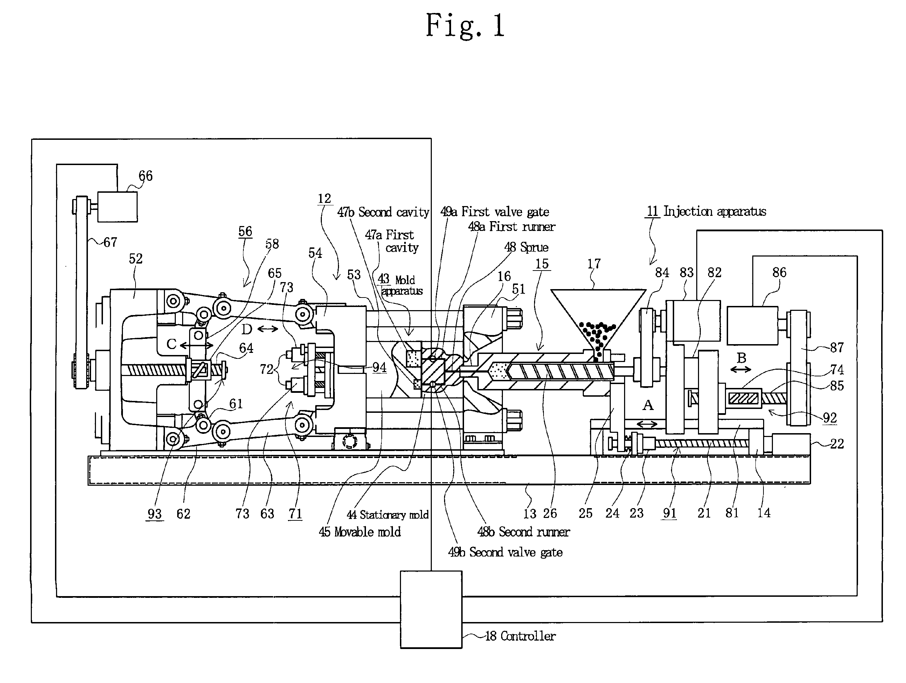

FIG. 1 is a schematic view of an injection molding machine according to a first embodiment of the present invention.

In FIG. 1, reference numeral 11 denotes an injection apparatus; 12 denotes a mold-clamping apparatus disposed in position to the injection apparatus 11; 13 denotes a molding machine frame supporting the injection apparatus 11 and the mold-clamping apparatus 12; 14 denotes an injection apparatus frame supported by the molding machine frame 13 and supporting the injection apparatus 11; 81 denotes a guide disposed on the injection apparatus frame 14 and extending along a longitudinal direction thereof; and 43 denotes a mold apparatus composed of a stationary mold 44 and a movable mold 45. A plurality of cavities; i.e., first and second cavities 47a and 47b, are formed in the mold apparatus 43.

A ball screw shaft 21 is rotatably supported by the injection apparatus frame 14, and one end of the ball screw shaft 21 is connected to a motor 22. A ball screw nut 23 is in screw-engagement with the ball screw shaft 21, and is connected to the injection apparatus 11 via a spring 24 and a bracket 25. Therefore, when the motor 22 is driven in a regular direction or a reverse direction, rotational motion of the motor 22 is converted to rectilinear motion by means of a combination of the ball screw shaft 21 and the ball screw nut 23; i.e., a screw apparatus 91, and the rectilinear motion is transmitted to the bracket 25. Thus, the bracket 25 is moved along the guide 81 in the direction shown by arrow A, whereby the injection apparatus 11 is advanced or retreated.

A heating cylinder 15 is secured to the bracket 25 such that the heating cylinder 15 extends forward (leftward in FIG. 1), and an injection nozzle 16 is disposed at the front end (left end in FIG. 1) of the heating cylinder 15. A hopper 17 is disposed on the heating cylinder 15, and a screw 26 is disposed within the heating cylinder 15 in such a manner that the screw 26 can advance and retreat (move leftward and rightward in FIG. 1) and can rotate. The screw 26 is supported at its rear end (right end in FIG. 1) by a support member 82.

A first servomotor 83 is attached to the support member 82, and rotation generated through drive of the first servomotor 83 is transmitted to the screw 26 via a timing belt 84.

A ball screw shaft 85 is rotatably supported on the injection apparatus frame 14 in parallel with the screw 26, and the ball screw shaft 85 and a second servomotor 86 are connected via a timing belt 87. The front end of the ball screw shaft 85 is in screw-engagement with a ball screw nut 74 fixed to the support member 82. Therefore, when the second servomotor 86 is driven, rotational motion of the second servomotor 86 is converted to rectilinear motion by means of a combination of the ball screw shaft 85 and the ball screw nut 74; i.e., a screw apparatus 92, and the rectilinear motion is transmitted to the support member 82, whereby the support member 82 is moved along the guide 81 in the direction shown by arrow B so as to advance or retreat the screw 26.

Next, operation of the injection apparatus 11 configured as described above will be generally described.

First, in a metering step, the first servomotor 83 is driven so as to rotate the screw 26 via the timing belt 84, to thereby retreat (move rightward in FIG. 1) the screw 26 to a predetermined position. At this time, resin supplied from the hopper 17 is heated and melted within the heating cylinder 15 and is accumulated at the front of the screw 26 as the screw 26 retreats.

Next, in an injection step, the injection nozzle 16 is pushed against the stationary mold 44, and the second servomotor 86 is driven so as to rotate the ball screw shaft 85 via the timing belt 87. At this time, since the support member 82 moves as a result of rotation of the ball screw shaft 85 so as to advance (move leftward in FIG. 1) the screw 26, the resin accumulated at the front of the screw 26 is injected from the injection nozzle 16, and is charged into the first and second cavities 47a and 47b formed between the stationary mold 44 and the movable mold 45 via a sprue (serving as a resin passage) 48 formed in the stationary mold 44 and first and second runners (serving as resin passages) 48a and 48b branching off the sprue 48. Notably, first and second gates (each serving as a valve) 49a and 49b for selectively opening and closing the first and second runners 48a and 48b are interposed in the first and second runners 48a and 48b.

The first and second cavities 47a and 47b differ from each other in terms of shape and resin charging amount; i.e., shot volume. In the illustrated example, the capacity of the first cavity 47a is larger than that of the second cavity 47b, so that the shot volume of the first cavity 47a is larger than that of the second cavity 47b. In the present embodiment, in order to facilitate description, only the case where two cavities; i.e., the first and second cavities 47a and 47b, are provided, will be described. However, the number of the cavities may be three or more, or any number insofar as a plurality of cavities are formed. In such a case, the runner is branched to subrunners which correspond in number to the cavities, and valve gates for opening and closing the subrunners are interposed in the subrunners.

Next, the mold-clamping apparatus 12 will be described.

The mold-clamping apparatus 12 includes a stationary platen (serving as a stationary-mold support apparatus) 51; a toggle support 52; tie bars 53 disposed to extend between the stationary platen 51 and the toggle support 52; a movable platen 54 disposed in opposition to the stationary platen 51 such that the movable platen 54 can advance or retreat (move rightward or leftward in FIG. 1) along the tie bars 53; and a toggle mechanism 56 disposed between the movable platen 54 and the toggle support 52. The stationary mold 44 and the movable mold 45 are attached to the stationary platen 51 and the movable platen 54, respectively, in such a manner that the stationary mold 44 and the movable mold 45 face each other.

The toggle mechanism 56 advances and retreats a crosshead 58 between the toggle support 52 and the movable platen 54 by means of a toggle servomotor 66 so as to advance and retreat the movable platen 54 along the tie bars 53, to thereby bring the movable mold 45 into contact with the stationary mold 44 and separate the movable mold 45 from the stationary mold 44. Thus, mold closing, mold clamping, and mold opening are performed.

For such operation, the toggle mechanism 56 includes toggle levers 61 swingably supported by the crosshead 58, toggle levers 62 swingably supported by the toggle support 52, and toggle arms 63 swingably supported by the movable platen 54. Link connection is established between the toggle levers 61 and the toggle levers 62 and between the toggle levers 62 and the toggle arms 63.

A ball screw shaft 64 is rotatably supported on the toggle support 52, and is in screw-engagement with a ball screw nut 65 fixed to the crosshead 58. In order to rotate the ball screw shaft 64, the above-mentioned toggle servomotor 66 is attached to a side surface of the toggle support 52.

Therefore, when the toggle servomotor 66 is driven, rotational motion of the toggle servomotor 66 is transmitted to the ball screw shaft 64 via a timing belt 67, and is converted to rectilinear motion by means of a combination of the ball screw shaft 64 and the ball screw nut 65; i.e., a screw apparatus 93, and the rectilinear motion is transmitted to the crosshead 58, whereby the crosshead 58 is advanced or retreated in the direction shown by arrow C. When the crosshead 58 is advanced (moved rightward in FIG. 1), the toggle mechanism 56 extends so as to advance the movable platen 54, to thereby perform mold closing and mold clamping. When the crosshead 58 is retreated (moved leftward in FIG. 1), the toggle mechanism 56 contracts so as to retreat the movable platen 54, to thereby perform mold opening.

An ejector apparatus 71 is disposed on the back surface of the movable platen 54. The ejector apparatus 71 includes unillustrated ejector pins extending through the movable mold 45 and having front ends (right ends in FIG. 1) facing the first and second cavities 47a and 47b, respectively; unillustrated ejector rods disposed rearward (leftward in FIG. 1) of the ejector pins; ball screw shafts 72 disposed rearward of the ejector rods and rotated by unillustrated servomotors; and ball screw nuts 73 in screw-engagement with the ball screw shafts 72.

Therefore, when the servomotor is driven, rotational motion of the servomotor is converted to rectilinear motion by means of a combination of the ball screw shafts 72 and the ball screw nuts 73; i.e., a screw apparatus 94, and the rectilinear motion is transmitted to the ejector rods, whereby the ejector rods and the ejector pins are advanced or retreated in the direction shown by arrow D.

The injection molding machine includes a controller 18 for controlling the operations of the first valve gate 49a, the second valve gate 49b, the toggle servomotor 66, the first servomotor 83, and the second servomotor 86. The controller 18 controls not only the mold-clamping apparatus 12 and the injection apparatus 11, but also opening and closing operations of valves (serving as selection means) having a shutoff function and disposed within the mold apparatus 43. The opening and closing operations of the valves are controlled such that they open and close in accordance with operations of the injection molding machine in the respective steps. The controller 18 may include an input section for inputting set operation conditions of the valves, as well as set operation conditions of the movable platen 54 and the screw 26, and a display section for monitoring operation of the injection molding machine. A detector such as a proximity switch may be provided on the mold apparatus 43 so as to confirm completion of the opening and closing operation of each valve. For example, when completion of valve closing cannot be detected, the controller 18 can determine that an anomaly has occurred, and display on the display section a warning display for warning an operator. In the case where operation of each valve is checked by making use of a detector as described above, when an anomaly occurs at a valve, the anomalous valve can be quickly identified.

Next, operation sequences of the injection molding machine having the above-described configuration will be described in detail.

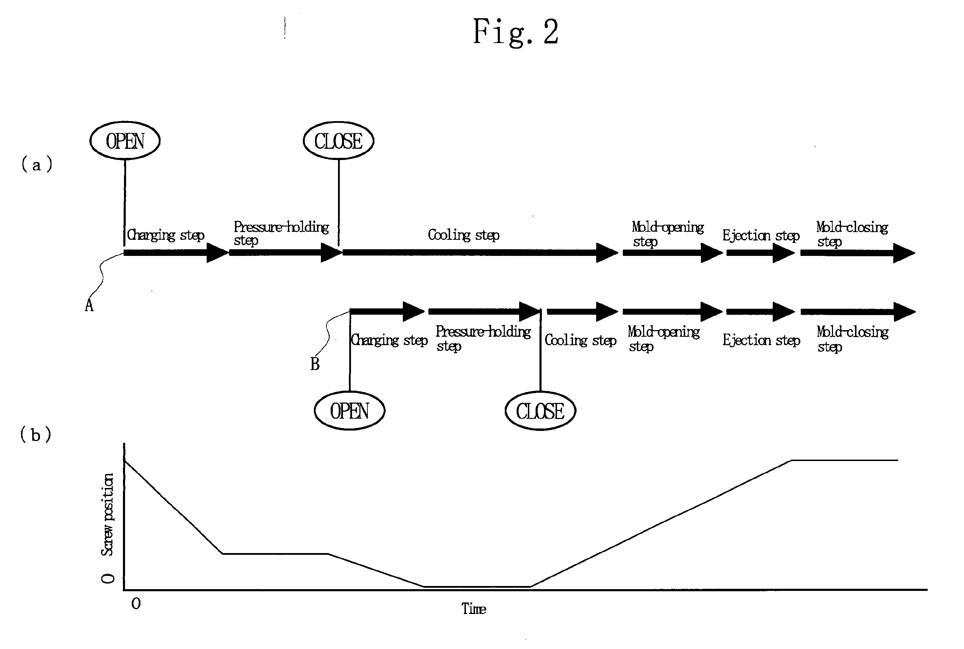

FIG. 2 is a pair of charts showing a first operation sequence of the injection molding machine according to the first embodiment of the present invention.

In the present embodiment, the injection molding machine operates as shown in FIG. 2 in the first operation sequence. FIG. 2(a) is a chart showing changes in the first and second cavities 47a and 47b with elapse of time in a molding process. Chart A shows the steps of a molding process in the first cavity 47a, and chart B shows the steps of a molding process in the second cavity 47b. Each of charts A and B is composed of a plurality of arrows, and each of arrows corresponds to one molding process step in the first cavity 47a or the second cavity 47b, and the length of each arrow represents the time of the corresponding molding process step. The name given to each arrow represents a molding process step corresponding thereto, and the direction of each arrow represents the direction of progress of time.

Therefore, the molding process steps in the first and second cavities 47a and 47b can be grasped with elapse of time, while following charts A and B in the directions of the arrows. Further, the marks "OPEN" and "CLOSE" added to charts A and B show timings at which the first valve gate 49a disposed in the first runner 48a connected to the first cavity 47a and the second valve gate 49b disposed in the second runner 48b connected to the second cavities 47b are opened and closed, respectively. Notably, as described above, the capacity of the first cavity 47a is greater than that of the second cavity 47b, so that the shot volume of the first cavity 47a is greater than that of the second cavity 47b.

FIG. 2(b) shows changes in position of the screw 26 of the injection apparatus 11 with time. The horizontal axis represents time, and the vertical axis represents the position of the screw 26. The value shown by the vertical axis decreases as the screw 26 advances; i.e., approaches the injection nozzle 16. In FIGS. 2(a) and 2(b), the scale of the horizontal axis representing time is the same.

When a mold-closing step is started with the mold apparatus 43 opened, the mold clamping force applied by means of the mold-clamping apparatus 12 increases, and the movable mold 45 advances and approaches the stationary mold 44. Finally, the parting face of the movable mold 45 comes into contact with the parting face of the stationary mold 44, whereby the mold-closing step is completed. In response thereto, in the injection apparatus 11 in which a metering step has been continued; that is, the screw 26 has been rotating so as to meter the molten resin, an injection step is started at the time origin shown in FIG. 2(b), whereby the screw 26 stops its rotation, and advances. As a result, the resin is injected from the injection nozzle 16, and flows into the sprue 48.

Further, as shown in chart A of FIG. 2(a), since the first valve gate 49a disposed in the first runner 48a opens at the time origin, the resin having flowed into the sprue 48 is charged into the first cavity 47a via the first runner 48a. That is, a charging step is started at the first cavity 47a. When a predetermined amount of the resin is charged into the first cavity 47a, the charging step is ended, and a pressure-holding step is performed. In the pressure-holding step, since the first valve gate 49a is in the opened state, the pressure applied by means of the screw 26 is also applied to the resin charged into the first cavity 47a. Subsequently, upon completion of the pressure-holding step, the first valve gate 49a is closed, and a cooling step is performed. In the cooling step, the mold apparatus 43 removes heat from the resin charged into the first cavity 47a, whereby the resin is cooled.

Meanwhile, as shown in chart B of FIG. 2(a), immediately after the first valve gate 49a is closed, the second valve gate 49b disposed in the second runner 48b opens, so that the resin having flowed into the sprue 48 is charged into the second cavity 47b via the second runner 48b. That is, a charging step is started at the second cavity 47b. In this case, as shown in FIG. 2(b), the screw 26 is advanced again. When a predetermined amount of the resin is charged into the second cavity 47b, the charging step is ended, and a pressure-holding step is performed. Since the capacity of the second cavity 47b is smaller than that of the first cavity 47a, apparently, the charging is completed within a shorter time, and a shorter time is required for the charging step. In the pressure-holding step, since the second valve gate 49b is in the opened state, the pressure applied by means of the screw 26 is also applied to the resin charged into the second cavity 47b. Subsequently, upon completion of the pressure-holding step, the second valve gate 49b is closed, and a cooling step is performed. In the cooling step, the mold apparatus 43 removes heat from the resin charged into the second cavity 47b, whereby the resin is cooled. Notably, when the second valve gate 49b is closed, in the injection apparatus 11, the screw 26 starts its rotation, and the resin-metering step is started, so that the screw 26 retreats as shown in FIG. 2(b).

When the resin charged into the first cavity 47a and that charged into the second cavity 47b are sufficiently cooled in the respective cooling steps and solidified to some degree, the cooling steps are ended, and respective mold-opening steps are started. As shown in charts A and B, the cooling steps for the first cavity 47a and the second cavity 47b end simultaneously. When the mold-opening steps are started, the movable mold 45 is retreated by means of the mold-clamping apparatus 12, so that the parting face of the movable mold 45 is separated from that of the stationary mold 44. Notably, molded products produced as a result of cooling the resin adhere to the movable mold 45 side surfaces of the first and second cavities 47a and 47b, respectively.

Subsequently, the distance between the parting face of the movable mold 45 and that of the stationary mold 44 becomes a predetermined distance, the ejector apparatus 71 is operated so as to perform respective ejection steps. In the ejection steps, the front ends of the unillustrated ejector pins project into the first and second cavities 47a and 47b on the movable mold 45 side, to thereby eject the adhering molded products. The ejected molded products fall down and are received within a receiving container, or are removed and collected by means of a molded-product removal apparatus, which is inserted into the space between the parting face of the movable mold 45 and that of the stationary mold 44. Subsequently, the respective mold-closing steps are started again, and the above-described operation is repeated.

As described above, in the first operation sequence, the timings at which the first valve gate 49a and the second valve gate 49b are opened and closed are controlled in such a manner that the charging step and the pressure-holding step for the second cavity 47b are performed at the same time as the cooling step for the first cavity 47a, and the respective cooling steps for the first cavity 47a and the second cavity 47b end simultaneously. Therefore, although the capacity of the first cavity 47a is larger than that of the second cavity 47b and the time required for cooling the resin charged into the first cavity 47a is longer than the time required for cooling the resin charged into the second cavity 47b, the mold-opening steps for the first cavity 47a and the second cavity 47b can be started simultaneously. That is, molding suitable for the first cavity 47a which requires a long cooling time as a molding condition can be performed, and molding suitable for the second cavity 47b which requires a short cooling time as a molding condition can be performed. In addition, molding can be optimally performed in the first cavity 47a and the second cavity 47b which differ in molding conditions, through effective use of the molding conditions of the molded product requiring a longer cooling step.

Since the charging step and the pressure-holding step for the second cavity 47b are performed after completion of the charging step and the pressure-holding step for the first cavity 47a, it is unnecessary to increase the diameter of the screw or the injection pressure so as to increase the resin charge amount per unit time. That is, a plurality of molded products can be produced simultaneously without increasing the size of the injection apparatus 11 or enhancing the performance of the injection apparatus 11. Moreover, since a plurality of types of molded products can be produced simultaneously by use of a single mold apparatus 43, many types of molded products can be produced in a reduced space.

Next, a second operation sequence will be described. Descriptions of operations similar to those in the first operation sequence are omitted.

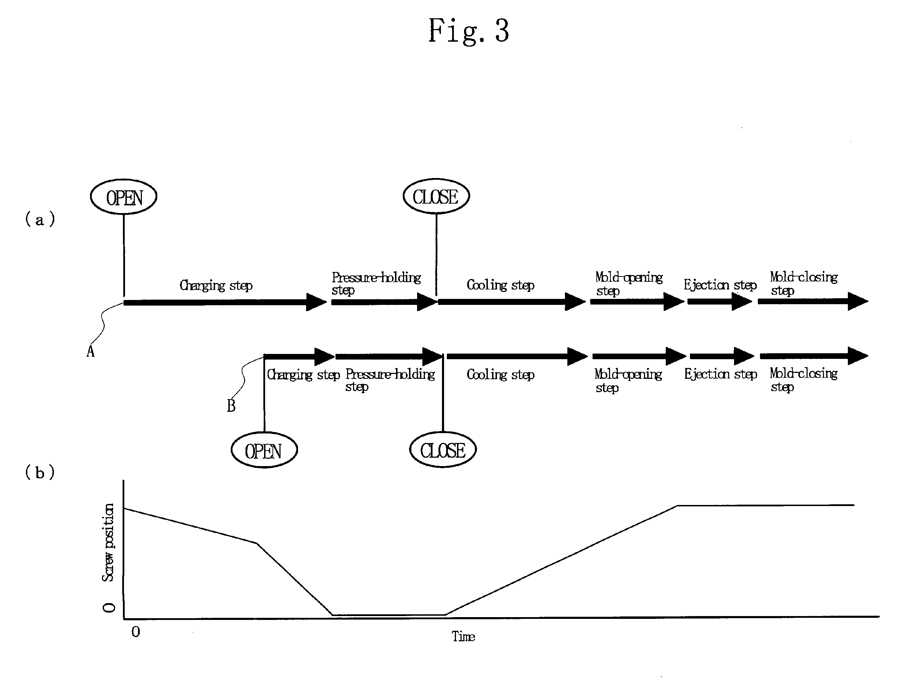

FIG. 3 is a pair of charts showing a second operation sequence of the injection molding machine according to the first embodiment of the present invention.

In the second operation sequence, the injection molding machine operates as shown in FIG. 3. In this case, as in the first operation sequence, the first valve gate 49a disposed in the first runner 48a opens at the time origin, so that a charging step is started at the first cavity 47a. Subsequently, the second valve gate 49b disposed in the second runner 48b is opened in the middle of the charging step performed at the first cavity 47a, so that a charging step is started at the second cavity 47b.

The timing at which the charging step is started at the second cavity 47b is a point in time when resin has been charged into the first cavity 47a in an amount corresponding to the difference between the capacity of the first cavity 47a and that of the second cavity 47b. That is, the charging step is started at the second cavity 47b when the remaining shot volume of the first cavity 47a becomes equal to the shot volume of the second cavity 47b. Therefore, when the charging step is started at the second cavity 47b, the resin injection amount per unit time of the injection apparatus 11 must be increased. Therefore, speed control is performed so as to increase the advancement speed of the screw 26, whereby the advancement speed of the screw 26 is increased as shown in FIG. 2(b).

As shown in charts A and B of FIG. 3(a), the charging step at the first cavity 47a and the charging step at the second cavity 47b end generally simultaneously, and respective pressure-holding steps are performed. The pressure-holding step at the first cavity 47a and the pressure-holding step at the second cavity 47b end generally simultaneously; the first valve gate 49a and the second valve gate 49b are closed; and respective cooling steps are performed. Since the operation after this point is identical with that in the first operation sequence, its description is omitted.

As described above, in the second operation sequence, the timings at which the first valve gate 49a and the second valve gate 49b are opened and closed are controlled in such a manner that a charging step is started at the second cavity 47b in the middle of a charging step at the first cavity 47a, and the charging steps at the first cavity 47a and the second cavity 47b end generally simultaneously. Therefore, even when the shot volume of the first cavity 47a is greater than that of the second cavity 47b, respective charging steps and pressure-holding steps can be ended generally simultaneously, and respective cooling steps and mold-opening steps can be started generally simultaneously. That is, molding suitable for the first cavity 47a which has a large shot volume as a molding condition can be performed, and molding suitable for the second cavity 47b which has a small shot volume as a molding condition can be performed. In addition, molding can be optimally performed in the first cavity 47a and the second cavity 47b which differ in molding conditions, by performing an ordinary molding operation similar to that in the case where a mold apparatus having a single cavity is used.

Since the charging step at the second cavity 47b is started in the middle of the charging step at the first cavity 47a, only required is performing speed control for increasing the advancement speed of the screw 26, and a plurality of molded products can be produced simultaneously without increasing the size of the injection apparatus 11. Moreover, since a plurality of types of molded products can be produced simultaneously, many types of molded products can be produced in a reduced space.

Next, a third operation sequence will be described. Descriptions of operations similar to those in the first and second operation sequences are omitted.

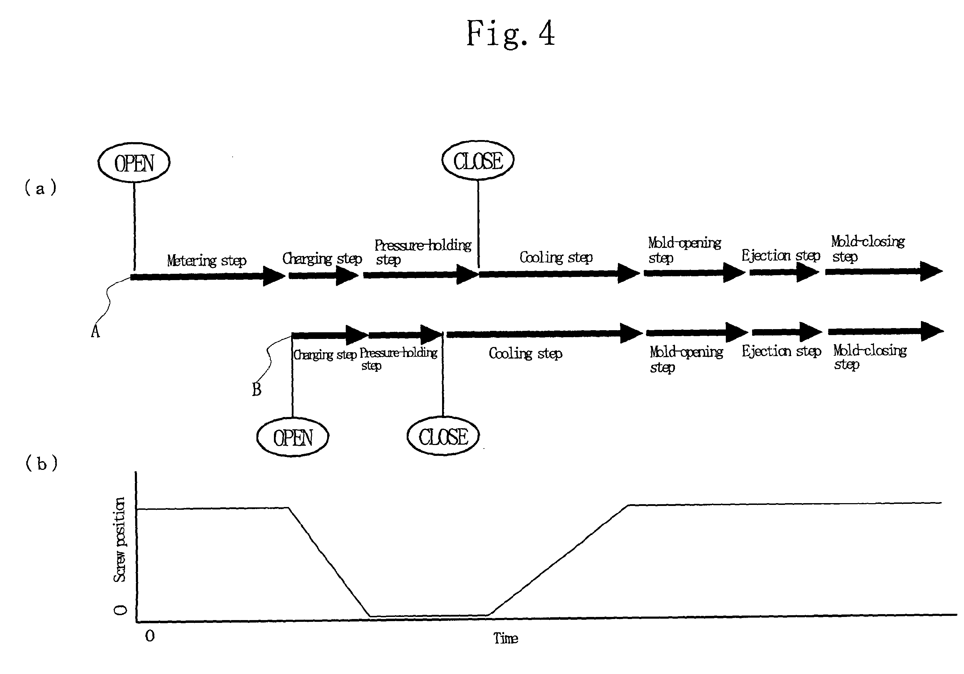

FIG. 4 is a pair of charts showing a third operation sequence of the injection molding machine according to the first embodiment of the present invention.

In the third operation sequence, the injection molding machine operates as shown in FIG. 4.. In this case, after completion of a mold-closing step, the first valve gate 49a disposed in the first runner 48a opens at the time origin in a state in which the screw 26 of the injection apparatus 11 is rotating to continue a resin metering step. Notably, in the metering step, the screw 26 is prevented from retreating. Therefore, as a result of rotation of the screw 26, resin is pushed out of the injection nozzle 16 to flow into the sprue 48, and is charged into the first cavity 47a via the first runner 48a.

Subsequently, respective charging steps are started when resin is charged into the first cavity 47a in an amount corresponding to the difference between the capacity of the first cavity 47a and that of the second cavity 47b; i.e., when the remaining shot volume of the first cavity 47a becomes equal to the shot volume of the second cavity 47b. Thus, the screw 26 stops its rotation and advances. As a result, the resin is injected from the injection nozzle 16, and flows into the sprue 48. Further, simultaneously, the second valve gate 49b disposed in the second runner 48b is opened. Therefore, the resin injected from the injection nozzle 16 is charged into the first cavity 47a and the second cavity 47b via the first runner 48a and the second runner 48b, respectively. In this case, speed control for controlling the advancement speed of the screw 26 is performed.

As shown in charts A and B of FIG. 4(a), the charging step at the first cavity 47a and the charging step at the second cavity 47b end generally simultaneously, and respective pressure-holding steps are performed. In this case, the pressure-holding step at the second cavity 47b is first ended, the second valve gate 49b is closed, and a cooling step is performed. Subsequently, the pressure-holding step at the first cavity 47a is ended, the first valve gate 49a is closed, and a cooling step is performed. Subsequently, the cooling step at the first cavity 47a and the cooling step at the second cavity 47b end simultaneously. Since the operation after this point is identical with those in the first and second operation sequences, its description is omitted.

As described above, in the third operation sequence, the timings at which the first valve gate 49a and the second valve gate 49b are opened and closed are controlled in such a manner that resin is charged into the first cavity 47a in the middle of a metering step, and the charging step at the first cavity 47a and the charging step at the second cavity 47b end generally simultaneously. Therefore, even when the shot volume of the first cavity 47a is greater than that of the second cavity 47b, the respective charging steps can be ended generally simultaneously, and respective mold-opening steps can be started generally simultaneously. In this case, the pressure-holding step at the first cavity 47a can be made longer than the pressure-holding step at the second cavity 47b. That is, molding suitable for the first cavity 47a which has a large shot volume as a molding condition can be performed, and molding suitable for the second cavity 47b which has a small shot volume as a molding condition can be performed. In addition, molding can be optimally performed in the first cavity 47a and the second cavity 47b which differ in molding conditions, by performing an ordinary molding operation similar to that in the case where a mold apparatus having a single cavity is used.

Since the charging step at the second cavity 47b is started in the middle of the charging step at the first cavity 47a, only required is performing speed control for increasing the advancement speed of the screw 26, and a plurality of molded products can be produced simultaneously without increasing the size of the injection apparatus 11. Moreover, since a plurality of types of molded products can be produced simultaneously, many types of molded products can be produced in a reduced space.

Next, a fourth operation sequence will be described. Descriptions of operations similar to those in the first through third operation sequences are omitted.

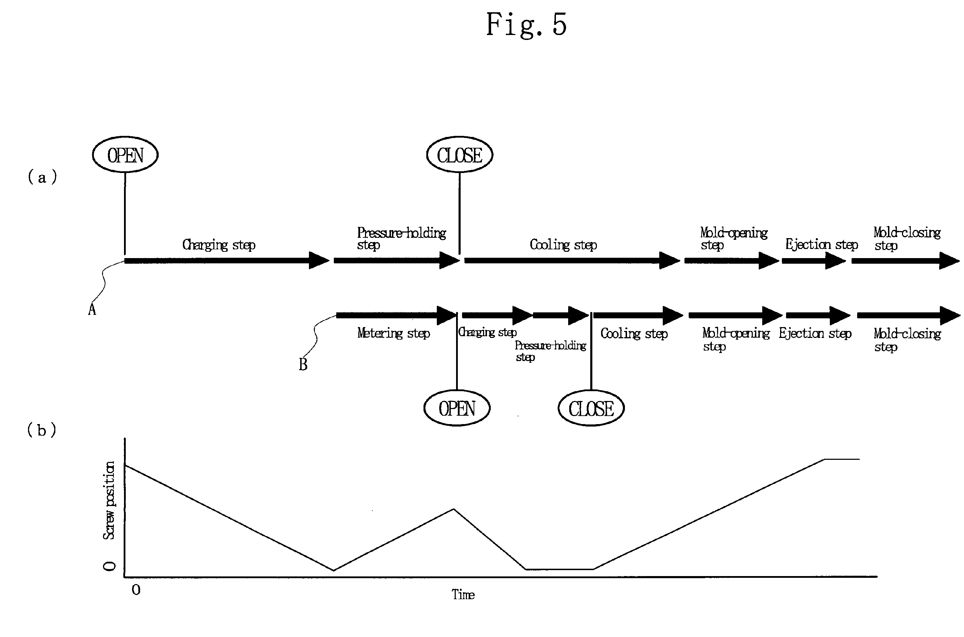

FIG. 5 is a pair of charts showing a fourth operation sequence of the injection molding machine according to the first embodiment of the present invention.

In the fourth operation sequence, the injection molding machine operates as shown in FIG. 5. In this case, as in the first operation sequence, the first valve gate 49a disposed in the first runner 48a opens at the time origin, so that a charging step is started at the first cavity 47a. When resin of a predetermined amount is charged into the first cavity 47a, the charging step is ended, and a pressure-holding step is performed. During the pressure-holding step, in the injection apparatus 11, a metering step is performed; i.e., the screw 26 is rotated so as to measure the resin to be charged into the second cavity 47b. At this time, the pressure holding is performed at the first cavity 47a under the same pressure as the back pressure.

When the metering step ends, the second valve gate 49b disposed in the second runner 48b is opened, so that a charging step is started at the second cavity 47b. Simultaneously with this, the first valve gate 49a is closed, and a cooling step is started at the first cavity 47a. In this case, as shown in FIG. 5(b), the screw 26 is advanced again. When the resin of a predetermined amount is charged into the second cavity 47b, the charging step is ended, and a pressure-holding step is performed. Notably, since the capacity of the second cavity 47b is smaller than that of the first cavity 47a, charging is completed within a shorter time, so that the charging step and the pressure-holding step require shorter times. Subsequently, when the pressure-holding step is ended, the second valve gate 49b is closed, and a cooling step is performed.

As shown in charts A and B, the cooling step at the first cavity 47a and the cooling step at the second cavity 47b end simultaneously. Since the operation after this point is identical with those in the first through third operation sequences, its description is omitted.

As described above, in the fourth operation sequence, resin is first charged into the first cavity 47a only; after completion of the charging step at the first cavity 47a, a metering step is performed at the injection apparatus 11 so as to measure the resin to be charged into the second cavity 47b; and the resin is then charged into the second cavity 47b only. Therefore, even when the total short volume of the first cavity 47a and the second cavity 47b is larger than the capacity of the injection apparatus 11 and the metering step must be performed a plurality of times, molding can be performed at the first cavity 47a and the second cavity 47b by means of a molding process of a single cycle. Accordingly, the throughput of the injection molding machine can be improved. In addition, molding suitable for the first cavity 47a which has a long cooling time as a molding condition can be performed, and molding suitable for the second cavity 47b which has a short cooling time as a molding condition can be performed. Moreover, since a plurality of types of molded products can be produced simultaneously, many types of molded products can be produced in a reduced space.

In the present embodiment, the first valve gate 49a and the second valve gate 49b disposed in the first runner 48a and the second runner 48b formed in the stationary model 44 are controlled to open and close by means of the controller 18 so as to charge resin into the first cavity 47a and the second cavity 47b, which differ in short volume, in accordance with their molding conditions.

Therefore, optimal molded products can be produced under optimal molding conditions by use of the first cavity 47a and the second cavity 47b, which differ in molding conditions. Further, manufacture of the mold apparatus 43 becomes easier, and the cost of the mold apparatus 43 can be reduced.

Moreover, since a plurality of types of molded products can be produced simultaneously by use of a single mold apparatus 43, many types of molded products can be produced in a reduced space. Furthermore, a plurality of molded products can be produced simultaneously without increasing the size of the injection apparatus 11 or enhancing the performance of the injection apparatus 11.

Next, a second embodiment of the present embodiment will be described. Notably, components having the same configurations as those in the first embodiment will be denoted by the same reference numerals, and their descriptions are omitted. Further, as to the same operations and effects as those in the first embodiment, their descriptions are omitted.

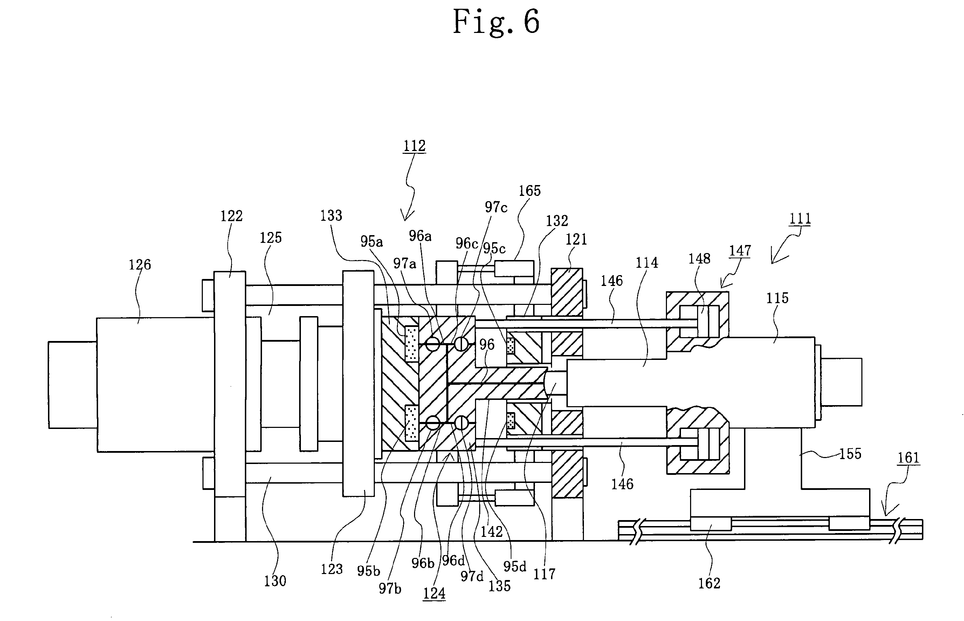

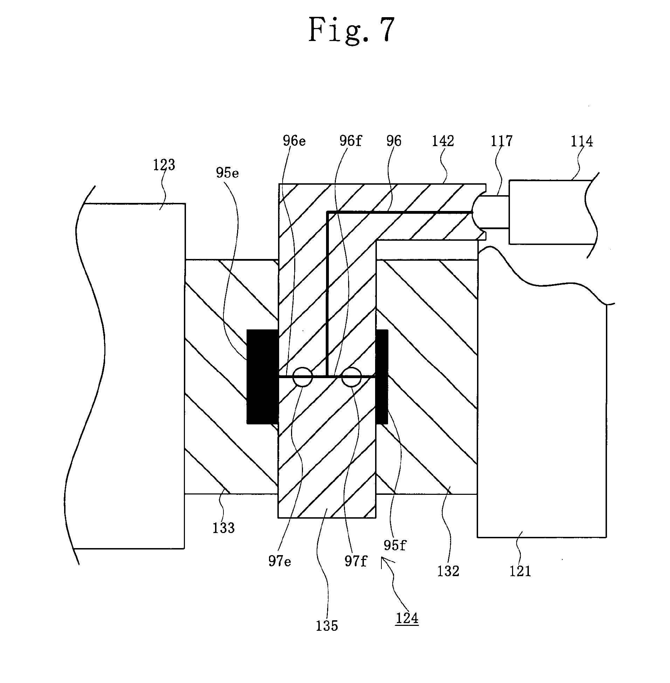

FIG. 6 is a schematic view of an injection molding machine according to the second embodiment of the present invention. FIG. 7 is a view showing a modification of a stack mold apparatus of the injection molding machine according to the second embodiment of the present invention.

In FIG. 6, reference numeral 111 denotes an injection apparatus; and 112 denotes a mold-clamping apparatus. The injection apparatus 111 includes a heating cylinder 114, an unillustrated screw disposed within the heating cylinder 114 in such a manner that the screw can rotate and can advance and retreat; a drive section 115 for rotating, advancing, and retreating the screw; and an injection nozzle 117 disposed at the front end of the heating cylinder 114.

Meanwhile, the mold-clamping apparatus 112 includes a stationary platen (serving as a stationary-mold support apparatus) 121; a support plate 122 disposed in opposition to the stationary platen 121; a movable platen 123 to be advanced and retreated in relation to the stationary platen 121; a stack mold apparatus 124, a mold-clamping unit 125, and a mold-clamping cylinder 126. Tie bars 130 are disposed to extend between the stationary platen 121 and the support plate 122. The movable platen 123 is disposed in such a manner that the movable platen 123 can advance and retreat along the tie bars 130. The movable platen 123 can be moved by means of driving the mold-clamping cylinder 126 to thereby operate the mold-clamping unit 125.

A stationary mold 132 is attached to the stationary platen 121, and a movable mold 133 is attached to the movable platen 123. Further, an intermediate mold 135 is disposed between the stationary mold 132 and the movable mold 133. A plurality of cavities; i.e., first cavities 95a and 95b, are formed between the intermediate mold 135 and the movable mold 133; and a plurality of cavities; i.e., second cavities 95c and 95d, are formed between the intermediate mold 135 and the stationary mold 132. The first cavities 95a and 95b differ from the second cavities 95c and 95d in terms of shape and resin charge amount; i.e., shot volume. In the example shown in FIG. 6, the capacities of the first cavities 95a and 95b are larger than those of the second cavities 95c and 95d, so that the shot volumes of the first cavities 95a and 95b are larger than those of the second cavities 95c and 95d. The first cavities 95a and 95b are the same in terms of shape and resin charge amount, and the second cavities 95c and 95d are the same in terms of shape and resin charge amount. No restriction is imposed on the number of the cavities, insofar as a plurality of cavities are formed. Intermediate-mold drive apparatuses 165 are disposed on the stationary mold 132, and the intermediate mold 135 is advanced or retreated (moved rightward or leftward in FIG. 6) by the intermediate-mold drive apparatuses 165. Since a sufficient installation space is not present for the stationary mold 132, the intermediate-mold drive apparatuses 165 are smaller than the mold-clamping cylinder 126, so that theirs output is small. However, this problem of small output can be solved by disposing the intermediate-mold drive apparatuses 165 at a plurality of locations on the outer circumference of the stationary mold 132.

By virtue of the above-described configuration, by means of advancing and retreating the movable platen 123, the movable mold 133 is caused to come into contact with and separate from the intermediate mold 135, and the intermediate mold 135 is caused to come into contact with and separate from the stationary mold 132, whereby mold closing, mold clamping, and mold opening can be performed. A snorkel 142 is formed on the intermediate mold 135 to project toward the stationary platen 121. A sprue 96, which serves as a resin passage, is formed in the snorkel 142. Further, first runners 96a and 96b and second runners 96c and 96d, which are branched off the sprue 96 and which serve as resin passages, are formed in the intermediate mold 135. The first runners 96a and 96b are connected to the first cavities 95a and 95b, and the second runners 96c and 96d are connected to the second cavities 95c and 95d. First valve gates (serving as valves) 97a and 97b for opening and closing the first runners 96a and 96b are interposed in the first runners 96a and 96b. Second valve gates (serving as valves) 97c and 97d for opening and closing the second runners 96c and 96d are interposed in the second runners 96c and 96d.

A plurality of connection rods 146 are formed on the intermediate mold 135 to project toward the injection apparatus 111. Meanwhile, a moving cylinder 147 is disposed in the injection apparatus 111, and the distal ends of the connection rods 146 are connected to a piston 148 received in the moving cylinder 147. Accordingly, the injection nozzle 117 can be brought into contact with or separated from the snorkel 142 by means of supplying oil to the moving cylinder 147 or discharging oil therefrom to thereby change the relative distance between the intermediate mold 135 and the injection apparatus 111.

Notably, the stack mold apparatus 124 may have a structure as shown in FIG. 7. In this case, the snorkel 142 is formed in such a manner that it projects from a side surface of the intermediate mold 135, and passes trough a space outside the stationary mold 132 and the stationary platen 121, without passing through the stationary mold 132 and the stationary platen 121. Notably, in the example shown in FIG. 7, a single first cavity 95e and a single second cavity 95f are formed. Similarly, a single first runner 96e and a single second runner 96f are formed, and a single first valve gate 97e and a single second valve gate 97f are provided.

A linear motion guide 161 is disposed under the injection apparatus 111, and the injection apparatus 111 can be advanced and retreated along the linear motion guide 161. For such movement, a leg portion 155 is formed under the injection apparatus 111, and holding blocks 162 to be placed on the linear motion guide 161 are provided on the leg portion 155. The linear motion guide 161 has a large number of unillustrated balls, which slightly project from the upper surface of the linear motion guide 161, and supports the holding blocks 162 by means of rolling friction.

Accordingly, when the movable platen 123 is advanced or retreated, the intermediate mold 135 is advanced or retreated in the same direction, whereby the injection apparatus 111 can be advanced or retreated via the connection rods 146 in the same direction and by the same amount. Since the linear motion guide 161 is used for advancement and retreat of the injection apparatus 111 as described above, frictional resistance can be reduced to 1/20 to 1/40. Particularly, since startup frictional resistance can be reduced and the difference between the startup frictional resistance and dynamic frictional resistance is small, it becomes easier to move the injection apparatus 111 and the mold-clamping apparatus 112, which have large weights, in an interlocked manner.

The mold injection machine has an unillustrated controller. The controller has a configuration similar to that of the controller 18 in the first embodiment, and controls all the operations of the injection molding machine, including operations of the first valve gates 97a and 97b and the second valve gates 97c and 97d.

Next, operation sequences of the injection molding machine of the present embodiment will be described in detail.

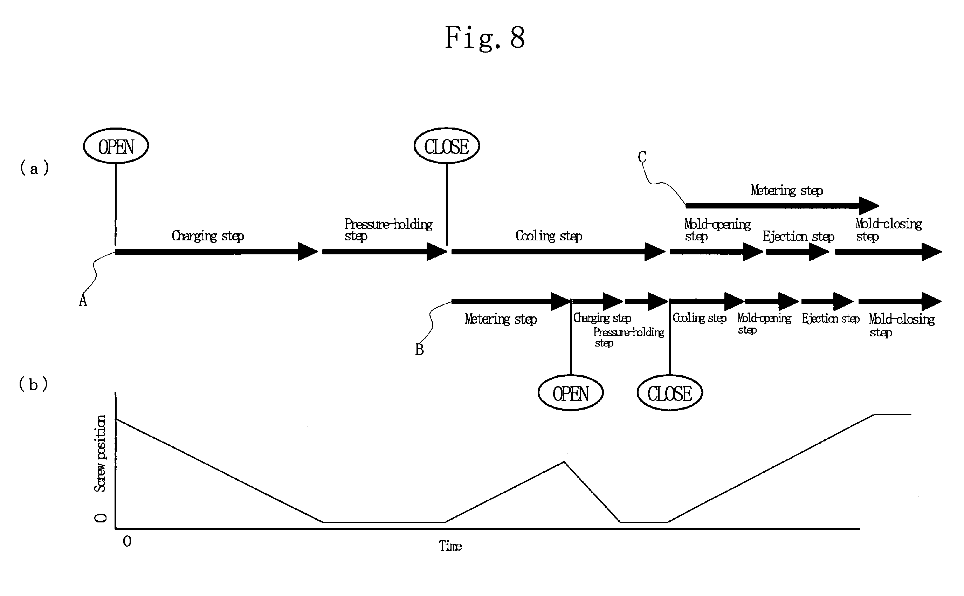

FIG. 8 is a pair of charts showing a first operation sequence of the injection molding machine according to the second embodiment of the present invention.

First, the first operation sequence will be described. FIG. 8 shows charts similar to those shown in FIGS. 2 to 5 in the first embodiment. Chart C shows a portion of steps performed in the injection apparatus 111. Descriptions of operations similar to those in the first through fourth operation sequences in the first embodiment are also omitted.

In this case, at the time origin, the first valve gates 97a and 97b or the first valve gate 97e disposed in the first runners 96a and 96b or in the first runner 96e is opened, and a charging step is started at the first cavities 95a and 95b or the first cavity 95e. When a predetermined amount of the resin is charged into the first cavities 95a and 95b or the first cavity 95e, the charging step is ended, and a pressure-holding step is performed. Subsequently, upon completion of the pressure-holding step, the first valve gates 97a and 97b or the first valve gate 97e is closed, and a cooling step is performed.

Meanwhile, immediately after the first valve gates 97a and 97b or the first valve gate 97e is closed, in the injection apparatus 111, a metering step is performed; i.e., the screw is rotated to meter the resin to be charged into the second cavities 95c and 95d or the second cavity 95f. After completion of the metering step, the second valve gates 97c and 97d or the second valve gate 97f disposed in the second runners 96c and 96d or in the second runner 96f is opened, and a charging step is started at the second cavities 95c and 95d or the second cavity 95f. In this case, as shown in FIG. 8(b), the screw is advanced again. When a predetermined amount of the resin is charged into the second cavities 95c and 95d or the second cavity 95f, the charging step is ended, and a pressure-holding step is performed. Notably, since the second cavities 95c and 95d or the second cavity 95f is smaller in capacity than the first cavities 95a and 95b or the first cavity 95e, charging is completed within a shorter time, and the charging step and the pressure-holding step require a shorter time. Subsequently upon completion of the pressure-holding step, the second valve gates 97c and 97d or the second valve gate 97f is closed, and a cooling step is performed at the second cavities 95c and 95d or the second cavity 95f.

In the present embodiment, the stack mold apparatus 124 is employed, mold closing, mold clamping, and mold opening between the intermediate mold 135 and the stationary mold 132 can be performed independently of mold closing, mold clamping, and mold opening between the intermediate mold 135 and the movable mold 133. Therefore, at the time when the pressure-holding step at the second cavities 95c and 95d or the second cavity 95f is ended, the parting face of the movable mold 133 is separated from the parting face of the intermediate mold 135, whereby a mold-opening step is started at the first cavities 95a and 95b or the first cavity 95e. Further, immediately after the mold-opening step is started at the first cavities 95a and 95b or the first cavity 95e, as shown in chart C, a metering step for the first cavities 95a and 95b or the first cavity 95e is started in the injection apparatus 111.

Since the second cavities 95c and 95d or the second cavity 95f is small in capacity than the first cavities 95a and 95b or the first cavity 95e, the cooling step at the second cavities 95c and 95d or the second cavity 95f ends within in a shorter time. Subsequently, the parting face of the intermediate mold 135 is separated from the parting face of the stationary mold 132, whereby a mold-opening step is started at the second cavities 95c and 95d or the second cavity 95f. After that, respective mold-opening steps, ejection steps, and mold-closing steps are independently performed at the first cavities 95a and 95b or the first cavity 95e, and the second cavities 95c and 95d or the second cavity 95f.

As described above, in the first operation sequence, a charging step and a pressure-holding step are performed at the second cavities 95c and 95d or the second cavity 95f during a cooling step performed at the first cavities 95a and 95b or the first cavity 95e. After that, respective cooling steps, mold-opening steps, ejection steps, and mold-closing steps are independently performed at the first cavities 95a and 95b or the first cavity 95e, and the second cavities 95c and 95d or the second cavity 95f. Therefore, molding suitable for the first cavities 95a and 95b or the first cavity 95e, which requires a long cooling time as a molding condition can be performed, and molding suitable for the second cavities 95c and 95d or the second cavity 95f, which requires a short cooling time as a molding condition can be performed.

Even when the total short volume is larger than the plasticizing capacity of the injection apparatus 111 and the metering step must be performed a plurality of times, molding can be performed at the first cavities 95a and 95b or the first cavity 95e and the second cavities 95c and 95d or the second cavity 95f by means of a molding process of a single cycle. Accordingly, the throughput of the injection molding machine can be improved.

Moreover, the mold opening between the intermediate mold 135 and the stationary mold 132 and the mold opening between the intermediate mold 135 and the movable mold 133 can be performed alternately. Notably, although the drive force of the intermediate-mold drive apparatuses 165 is smaller that the drive force of the mold-clamping cylinder 126, the drive force of the intermediate-mold drive apparatuses 165 is sufficient for performance of the mold closing, mold clamping, and mold opening between the intermediate mold 135 and the stationary mold 132, because the second cavities 95c and 95d or the second cavity 95f is small in capacity, and therefore is small in shot volume.

Next, a second operation sequence will be described. Descriptions of operations similar to those in the first operation sequence are omitted.

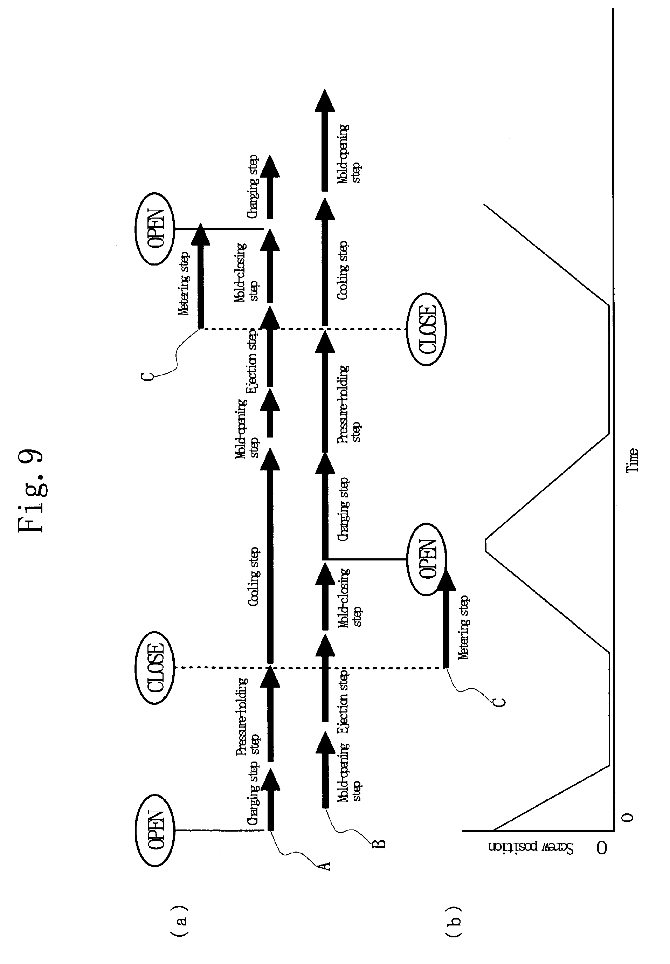

FIG. 9 is a pair of charts showing a second operation sequence of the injection molding machine according to the second embodiment of the present invention.

In the second operation sequence, the injection molding machine operates as shown in FIG. 9. Here, the capacity of the first cavities 95a and 95b or the first cavity 95e and the capacity of the second cavities 95c and 95d or the second cavity 95f are assumed to be large. In this case, in a period in which a cooling step of a previous cycle is performed at the second cavities 95c and 95d or the second cavity 95f, the first valve gates 97a and 97b interposed in the first runners 96a and 96b or the first valve gate 97e interposed in the first runner 96e is opened, and a charging step is started at the first cavities 95a and 95b or the first cavity 95e. When a predetermined amount of the resin is charged into the first cavities 95a and 95b or the first cavity 95e, the charging step is ended, and a pressure-holding step is performed. Subsequently, upon completion of the pressure-holding step, the first valve gates 97a and 97b or the first valve gate 97e is closed, and a cooling step is performed.

Meanwhile, at the time when the first valve gates 97a and 97b or the first valve gate 97e is closed, an ejection step of the previous cycle is being performed at the second cavities 95c and 95d or the second cavity 95f. Further, as shown in chart C, immediately after the first valve gates 97a and 97b or the first valve gate 97e is closed, in the injection apparatus 111, a metering step is performed; i.e., the screw is rotated to meter the resin to be charged into the second cavities 95c and 95d or the second cavity 95f. After completion of the metering step, the second valve gates 97c and 97d or the second valve gate 97f disposed in the second runners 96c and 96d or in the second runner 96f is opened, and a charging step is started at the second cavities 95c and 95d or the second cavity 95f. Notably, at the time when the second valve gates 97c and 97d or the second valve gate 97f is opened, a cooling step is being performed at the first cavities 95a and 95b or the first cavity 95e.

Subsequently, when the charging step and the pressure-holding step at the second cavities 95c and 95d or the second cavity 95f end, the second valve gates 97c and 97d or the second valve gate 97f is closed, and a cooling step is started. Meanwhile, at the time when the second valve gates 97c and 97d or the second valve gate 97f is closed, an ejection step of the previous cycle is being performed at the first cavities 95a and 95b or the first cavity 95e. Further, as shown in chart C, immediately after the second valve gates 97c and 97d or the second valve gate 97f is closed, in the injection apparatus 111, a metering step is performed; i.e., the screw is rotated to meter the resin to be charged into the first cavities 95a and 95b or the first cavity 95e. After completion of the metering step, the first valve gates 97a and 97b or the first valve gate 97e disposed in the first runners 96a and 96b or in the first runner 96e is opened, and a charging step of the next cycle is started at the first cavities 95a and 95b or the first cavity 95e. Notably, at the time when the first valve gates 97a and 97b or the first valve gate 97e is opened, a cooling step is being performed at the second cavities 95c and 95d or the second cavity 95f. After that, the above-described operation is repeated, and respective charging steps, pressure-holding steps, cooling steps, mold-opening steps, ejection steps, and mold-closing steps are independently performed at the first cavities 95a and 95b or the first cavity 95e and the second cavities 95c and 95d or the second cavity 95f. Further, since resin must be charged into the first cavities 95a and 95b or the first cavity 95e when mold opening is being performed at the second cavities 95c and 95d or the second cavity 95f, the injection apparatus 111 is advanced and retreated in synchronism with advancement and retreat of the intermediate mold 135. Here, the intermediate-mold drive apparatus 65 can output a mold clamping force required to form the second cavities 95c and 95d or the second cavity 95f.

As described above, in the second operation sequence, respective charging steps, pressure-holding steps, cooling steps, mold-opening steps, ejection steps, and mold-closing steps are independently performed at the first cavities 95a and 95b or the first cavity 95e and the second cavities 95c and 95d or the second cavity 95f; and when the charging step and the pressure-holding step at one side are ended and the metering step is completed at the injection apparatus 111, the charging step at the other side is started. Therefore, it is possible to perform molding suitable for the first cavities 95a and 95b or the first cavity 95e and the second cavities 95c and 95d or the second cavity 95f, which require a large shot volume as a molding condition.

Even when the total short volume of the first cavities 95a and 95b or the first cavity 95e and the second cavities 95c and 95d or the second cavity 95f is larger than the capacity of the injection apparatus 111 and the metering step must be performed a plurality of times, molding can be performed at the first cavities 95a and 95b or the first cavity 95e and the second cavities 95c and 95d or the second cavity 95f by means of a molding process of a single cycle. Accordingly, the throughput of the injection molding machine can be improved.

Moreover, since the mold opening between the intermediate mold 135 and the stationary mold 132 and the mold opening between the intermediate mold 135 and the movable mold 133 can be performed independently of each other, the stroke of mold opening can be shortened, and the overall length of the injection molding machine can be shortened.

As described above, in the present embodiment, the first valve gates 97a and 97b or the first valve gate 97e and the second valve gates 97c and 97d or the second valve gate 97f are controlled to be opened and closed; and the mold closing, mold clamping, and mold opening between the intermediate mold 135 and the stationary mold 132 are controlled independently of the mold closing, mold clamping, and mold opening between the intermediate mold 135 and the movable mold 133. Therefore, optimal molded products can be produced under optimal molding conditions by use of the first cavities 95a and 95b or the first cavity 95e and the second cavities 95c and 95d or the second cavity 95f, which differ in molding conditions.

Moreover, since the mold opening between the intermediate mold 135 and the stationary mold 132 and the mold opening between the intermediate mold 135 and the movable mold 133 can be performed alternatively, the stroke of mold opening can be shortened, and the overall length of the injection molding machine can be shortened. Furthermore, a plurality of molded products can be produced simultaneously without increasing the size of the injection apparatus 111 or enhancing the performance of the injection apparatus 111.

In the above-described first and second embodiments, a horizontal-type injection molding machine in which the movable platen moves in a lateral direction (horizontal direction) has been described. However, the present invention can be applied to a vertical-type injection molding machine in which the movable platen moves upward and downward (vertical direction).

Next, a third embodiment of the present embodiment will be described. Notably, components having the same configurations as those in the first and second embodiments will be denoted by the same reference numerals, and their descriptions are omitted. Further, as to the same operations and effects as those in the first and second embodiments, their descriptions are omitted.

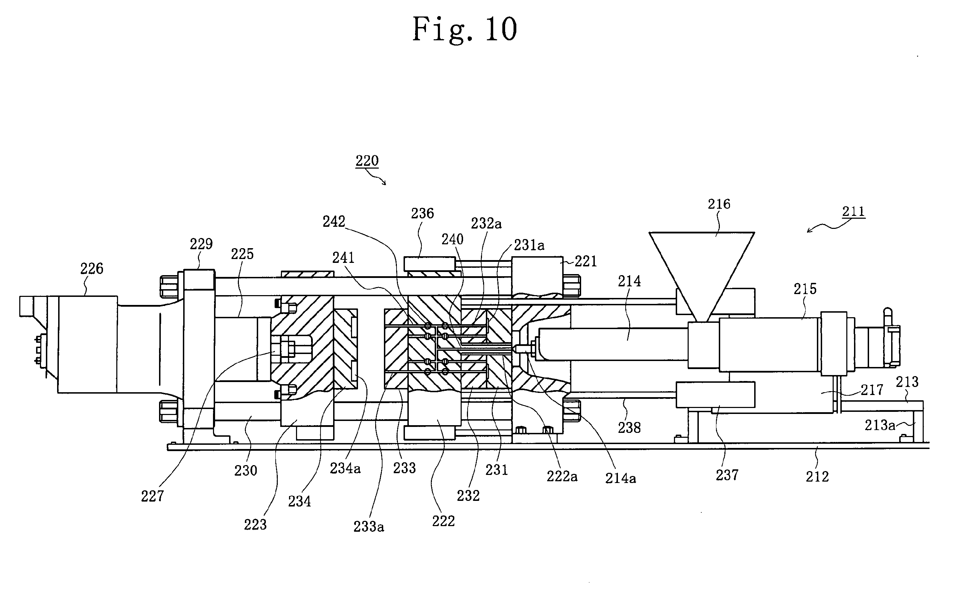

FIG. 10 is a schematic view of an injection molding machine according to the third embodiment of the present invention.

In FIG. 10, reference numeral 211 denotes an injection apparatus; 220 denotes a mold-clamping apparatus disposed in opposition to the injection apparatus 211; and 212 denotes a molding machine frame supporting the injection apparatus 211 and the mold-clamping apparatus 220. The injection apparatus 211 includes a heating cylinder 214, an unillustrated screw disposed within the heating cylinder 214 in such a manner that the screw can rotate and can advance and retreat; a drive section 215 for rotating, advancing, and retreating the screw; and an injection nozzle 214a disposed at the front end of the heating cylinder 214.

Meanwhile, the mold-clamping apparatus 220 includes a stationary platen (serving as a stationary-mold support apparatus) 221; a support plate 229 disposed in opposition to the stationary platen 221; a first movable platen (serving as a first movable-mold support apparatus) 223 to be advanced or retreated (moved rightward or leftward in FIG. 10) in relation to the stationary platen 221; a second movable platen (serving as a second movable-mold support apparatus) 222 disposed between the stationary platen 221 and the first movable platen 223; a mold-clamping unit 225, and a mold-clamping cylinder 226. Tie bars 230 are disposed to extend between the stationary platen 221 and the support plate 229. The first movable platen 223 and the second movable platen 222 are disposed in such a manner that they can slide along the tie bars 230. Notably, the above-described guide structure may be modified in such a manner that a guide apparatus, which is composed of, for example, a linear motion guide, is attached to each of the lower end portions of the first movable platen 223 and the second movable platen 222, and the guide apparatus is caused to move along a linear guide rail or the like, which is attached to the upper surface of the molding machine frame 212 and serves as a guide means. The first movable platen 223 can be moved by means of driving the mold-clamping cylinder 226 to thereby operate the mold-clamping unit 225.

A stationary mold 231 is attached to the stationary platen 221, and a movable mold 234 is attached to the first movable platen 223. Further, a stationary-side intermediate mold 232 is attached to a side of the second movable platen 222 facing the stationary platen 221, and a movable-side intermediate mold 233 is attached to a side of the second movable platen 222 facing the first movable platen 223. First cavities 234a are formed between the movable-side intermediate mold 233 and the movable mold 234; and second cavities 231a are formed between the stationary-side intermediate mold 232 and the stationary mold 231. The first cavities 234a differ from the second cavities 231a in terms of shape and resin charge amount; i.e., shot volume. In the example shown in FIG. 10, the capacities of the first cavities 234a are larger than those of the second cavities 231a, so that the shot volumes of the first cavities 234a are larger than those of the second cavities 231a. In the example shown in FIG. 10, a plurality of first cavities 234a and a plurality of second cavities 231a are formed. However, no limitation is imposed on the number of the first and second cavities, and a single first cavity and a single second cavity may be formed. Further, the example shown in FIG. 10, the plurality of first cavities 234a have the same shape and shot volume; however, they may have different shapes and shot volumes. Similarly, the plurality of second cavities 231a have the same shape and shot volume; however, they may have different shapes and shot volumes.

An ejector apparatus 227 is disposed on the back surface of the first movable platen 223. The ejector apparatus 227 includes unillustrated ejector pins extending through the movable mold 234 and having front ends (right ends in FIG. 10) facing the first cavities 234a; unillustrated ejector rods disposed rearward (leftward in FIG. 10) of the ejector pins; and an unillustrated ejector drive apparatus disposed rearward of the ejector rods. When the ejector drive apparatus is driven, the front ends of the ejector pins project into the first cavities 234a so as to eject molded products from the first cavities 234a. Notably, an ejector apparatus similar to the ejector apparatus 227 may be provided on the stationary platen 221 in order to eject molded products from the second cavities 231a.

A plurality of intermediate-member drive apparatuses 236, which serve as a drive apparatus for the second movable-mold support apparatus, are attached to the outer circumference of the second movable platen 222, and the second movable platen 222 is advanced and retreated (moved leftward and rightward in FIG. 10) by the intermediate-member drive apparatuses 236. Each of the intermediate-member drive apparatuses 236 is composed of a cylinder apparatus such as an oil hydraulic cylinder or a pneumatic cylinder, and one end of the piston rod of the cylinder apparatus is fixed to the stationary platen 221. By virtue of this configuration, the second movable platen 222 can be moved in relation to the stationary platen 221 by means of operating the intermediate-member drive apparatuses 236. Notably, the intermediate-member drive apparatuses 236 may be attached to the stationary platen 221 or the first movable platen 223. In this manner, by means of advancing and retreating the first and second movable platens 223 and 222, the movable mold 234 can be brought into contact with and separated from the movable-side intermediate mold 233 so as to perform mold closing, mold clamping, and mold opening, and the stationary-side intermediate mold 232 can be brought into contact with and separated from the stationary mold 231 so as to perform mold closing, mold clamping, and mold opening. Since a sufficient installation space is not provided for the intermediate-member drive apparatuses 236, the intermediate-member drive apparatuses 236 are smaller than the mold-clamping cylinder 226, so that their outputs are small. However, this problem of small output can be solved by disposing the intermediate-member drive apparatuses 236 at a plurality of locations on the outer circumference of the platen.

A snorkel 222a is formed on the second movable platen 222 to project toward the stationary platen 221. A sprue 240, which serves as a resin passage, is formed in the snorkel 222a. Further, a plurality of intermediate runners 241, which are branched off the sprue 240 and which serve as resin passages, are formed in the second movable platen 222. Of the intermediate runners 241, several runners are connected to first mold runners 233a which are formed in the movable-side intermediate mold 233 and which serve as resin passages, and to second mold runners 232a which are formed in the stationary-side intermediate mold 232 and which serve as resin passages. In the example shown in FIG. 10, two intermediate runners 241 are connected to the first mold runners 233a, and other two intermediate runners 241 are connected to the second mold runners 232a. The first mold runners 233a, which are equal in number to the first cavities 234a, are connected to the corresponding first cavities 234a; and the second mold runners 232a, which are equal in number to the second cavities 231a, are connected to the corresponding second cavities 231a.

A valve gate 242 is interposed in each intermediate runner 241 as a selection means for selecting a resin passage. The valve gate 242 is composed of first and second valve gates, each serving as a shutoff means for shutting off the intermediate runner 241. Therefore, the flows of resin flowing through the resin passages connected to the first cavities 234a and the second cavities 231a, respectively, can be selectively controlled by means of opening and closing the respective valve gates 242. Notably, a large number of intermediate runners 241 are formed in the second movable platen 222 in order to enable the second movable platen 222 to be used for general purposes, and enable many types of molds to be attached to the second movable platen 222. Therefore, some of the intermediate runners 241 may be connected neither to the first mold runners 233a nor the second mold runners 232a. The valve gate 242 interposed in such an intermediate runner 241 is maintained in a closed state. In the example shown in FIG. 10, four intermediate runners 241 are connected neither to the first mold runners 233a nor the second mold runners 232a; and the four valve gates 242 interposed in these four intermediate runners 241 are maintained in the closed state.

Further, connection rods 238 are formed on the second movable platen 222 to project toward the injection apparatus 211. Meanwhile, two injection unit drive apparatuses 237 are disposed on the injection apparatus 211, and the distal ends of the connection rods 238 are connected to the injection unit drive apparatus 237. Each of the injection unit drive apparatuses 237 is composed of a cylinder apparatus such as an oil hydraulic cylinder or a pneumatic cylinder, and one end of the piston rod of the cylinder apparatus is connected to the distal end of the corresponding connection rod 238. By virtue of this configuration, the relative distance between the second movable platen 222 and the injection apparatus 211 can be changed by means of operating the injection unit drive apparatuses 237, whereby the injection nozzle 214a can be brought into contact with or separated from the snorkel 222a.

A guide apparatus 217 composed of a linear motion guide or the like is disposed below the injection apparatus 211, so that the injection apparatus 211 can be advanced and retreated (moved leftward and rightward in FIG. 10) along a guide member 213 composed of guide rods, guide rails or the like. Notably, the guide member 213 is attached to the molding machine frame 212 via support members 213a. By virtue of this configuration, when the second movable platen 222 is advanced or retreated, the injection apparatus 211 can be advanced or retreated via the connection rods 238 in the same direction by the same amount. Further, since the guide apparatus 217 is used for advancement and retreat of the injection apparatus 211, the frictional resistance can be reduced, and it becomes easier to move the injection apparatus 211 and the mold-clamping apparatus 220, which have large weights, in an interlocked manner.

The mold injection machine has an unillustrated controller. The controller controls not only the operations of the mold-clamping apparatus 220 and the injection apparatus, but also the opening and closing operations of the valves disposed within the second movable platen 222. The opening and closing operations of the valves are controlled such that they open and close in accordance with operations of the injection molding machine in the respective steps. The controller may include an input section for inputting set operation conditions of the valves, as well as set operation conditions of the first movable platen 223 and the screw, and a display section for monitoring operation of the injection molding machine. A detector such as a proximity switch may be provided on the second mold apparatus 222 so as to confirm completion of the opening and closing operation of each valve. For example, when completion of valve closing cannot be detected, the controller can determine that an anomaly has occurred, and display on the display section a warning display for warning an operator. In the case where operation of each valve is checked by making use of a detector as described above, when an anomaly occurs at a valve, the anomalous valve can be quickly identified.

Next, operation sequences of the injection molding machine according to the present embodiment will be described.

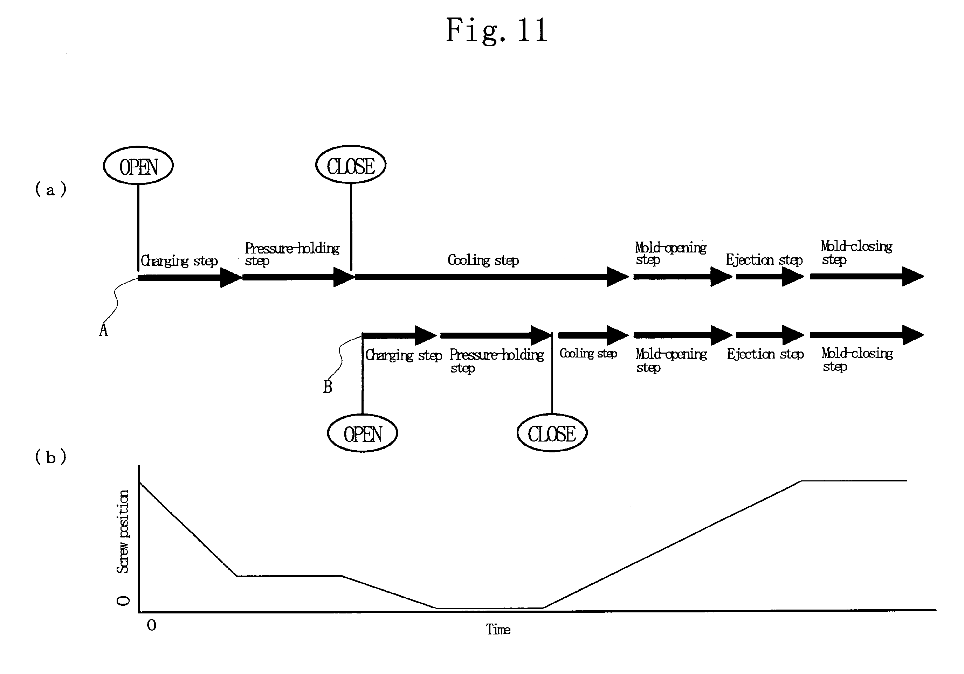

FIG. 11 is a pair of charts showing a first operation sequence of the injection molding machine according to the third embodiment of the present invention.

In the present embodiment, the injection molding machine operates as shown in FIG. 11 in the first operation sequence. FIG. 11(a) is a chart showing changes in the first and second cavities 234a and 231a with elapse of time in a molding process. Chart A shows the steps of a molding process in the first cavities 234a, and chart B shows the steps of a molding process in the second cavities 231a. Each of charts A and B is composed of a plurality of arrows, and each of arrows corresponds to one molding process step in the first cavities 234a or the second cavities 231a, and the length of each arrow represents the time of the corresponding molding process step. The name given to each arrow represents a molding process step corresponding thereto, and the direction of each arrow represents the direction of progress of time.

Therefore, the molding process steps in the first and second cavities 234a and 231a can be grasped with elapse of time, while following charts A and B in the directions of the arrows. Further, the marks "OPEN" and "CLOSE" added to charts A and B show timings at which the valve gates 242 disposed in the intermediate runners 241 connected to the first and second cavities 234a and 231a are opened and closed. Notably, as described above, the capacities of the first cavities 234a are greater than those of the second cavities 231a, so that the shot volumes of the first cavities 234a are greater than those of the second cavities 231a.

FIG. 11(b) shows changes in position of the screw of the injection apparatus 211 with time. The horizontal axis represents time, and the vertical axis represents the position of the screw. The value shown by the vertical axis decreases as the screw advances; i.e., approaches the injection nozzle 214a. In FIGS. 11(a) and 11(b), the scale of the horizontal axis representing time is the same.

When a mold-closing step is started with the mold apparatus opened; i.e., in a state in which the parting face of the movable mold 234 is separated from the parting face of the movable-side intermediate mold 233 and the parting face of the stationary-side intermediate mold 232 is separated from the parting face of the stationary mold 231, the mold-clamping unit 225 and the intermediate-member drive apparatus 236 operate, whereby the first mold platen 223 and the second mold platen 222 are advanced. As a result, the stationary-side intermediate mold 232 advances and approaches the stationary mold 231, and the movable mold 234 advances and approaches the movable-side intermediate mold 233. Thus, the parting face of the movable mold 234 comes into contact with the parting face of the movable-side intermediate mold 233, and the parting face of the stationary-side intermediate mold 232 comes into contact with the parting face of the stationary mold 231.

Notably, in a metering step, the drive section 215 rotates the screw so as to retreat (move rightward in FIG. 10) the screw to a predetermined position. At this time, resin supplied from the hopper 216 is heated and melted within the heating cylinder 214 and is accumulated at the front of the screw as the screw retreats. Further, in an injection step, the injection unit drive apparatus 237 operates so as to cause the injection apparatus 211 to approach the second movable platen 222, and push the injection nozzle 214a against the snorkel 222a. Since the drive section 215 advances (moves leftward in FIG. 10) the screw, the resin accumulated at the front of the screw within the heating cylinder 214 is injected from the injection nozzle 214a, so that the resin flows into the sprue 240 and the intermediate runners 241 formed in the second movable platen 222.

Subsequently, in the injection apparatus 211 in which a metering step has been continued, that is, the screw has been rotating within the heating cylinder 214 so as to meter the molten resin, an injection step is started at the time origin shown in FIG. 11(b), whereby the screw stops its rotation, and advances. As a result, the resin is injected from the injection nozzle 214a disposed at the front end of the heating cylinder 214, and flows into the sprue 240 and the intermediate runners 241 branched off the sprue 240.

Further, since the valve gates 242 disposed in the intermediate runners 241 connected to the first cavities 234a opens at the time origin shown in chart A of FIG. 11(a); i.e., before start of charging or simultaneously with the start of charging, the resin having flowed into the sprue 240 is charged into the first cavities 234a via the intermediate runners 241. That is, a charging step is started at the first cavities 234a. When a predetermined amount of the resin is charged into the first cavities 234a, the charging step is ended, and a pressure-holding step is performed. In the pressure-holding step, since the corresponding valve gates 242 are in the opened state, the pressure applied to the resin within the heating cylinder 214 by means of the screw is also applied to the resin charged into the first cavities 234a. Subsequently, upon completion of the pressure-holding step, the corresponding valve gates 242 are closed, and a cooling step is performed. In the cooling step, the movable mold 234 and the movable-side intermediate mold 233 remove heat from the resin charged into the first cavities 234a, whereby the resin is cooled.

Meanwhile, as shown in chart B of FIG. 11(a), immediately after the valve gates 242 disposed in the intermediate runners 241 connected to the first cavities 234a are closed, the valve gates 242 disposed in the intermediate runners 241 connected to the second cavities 231a are opened, so that the resin having flowed into the sprue 240 is charged into the second cavities 231a via the corresponding intermediate runners 241. That is, a charging step is started at the second cavities 231a. In this case, as shown in FIG. 11(b), the screw is advanced again. When a predetermined amount of the resin is charged into the second cavities 231a, the charging step is ended, and a pressure-holding step is performed.

Since the capacities of the second cavities 231a are smaller than those of the first cavities 234a, apparently, the charging is completed within a shorter time, and a shorter time is required for the charging step. In the pressure-holding step, since the corresponding valve gates 242 are in the opened state, the pressure applied to the resin within the heating cylinder 214 by means of the screw is also applied to the resin charged into the second cavities 231a.

Subsequently, upon completion of the pressure-holding step, the corresponding valve gates 242 are closed, and a cooling step is performed. In the cooling step, the stationary-side intermediate mold 232 and the stationary mold 231 remove heat from the resin charged into the second cavities 231a, whereby the resin is cooled. When the cooling step is ended, the valve gates 242 disposed in the corresponding intermediate runners 241 are closed, and in the injection apparatus 211, the screw starts its rotation so as to start a resin metering step, so that the screw retreats as shown in FIG. 11(b).

When the resin charged into the first cavities 234a and the second cavities 231a are sufficiently cooled in the respective cooling steps and solidified to some degree, the cooling steps are ended, and respective mold-opening steps are started. As shown in charts A and B, the cooling steps for the first cavities 234a and the second cavities 231a end simultaneously. When the respective mold-opening steps are started, the mold-clamping unit 225 and the intermediate-member drive apparatus 236 operate, whereby the first movable platen 223 and the second movable platen 222 retreat. As a result, the parting face of the movable mold 234 is separated from the parting face of the movable-side intermediate mold 233, and the parting face of the stationary-side intermediate mold 232 is separated from the parting face of the stationary mold 231. Notably, molded products produced as a result of cooling the resin adhere to the surfaces of the first cavities 234a on the movable mold 234, and to the surface of the second cavities 231a on the stationary mold 231.

Subsequently, when the distance between the parting face of the movable mold 234 and that of the movable-side intermediate mold 233 becomes a predetermined distance, the ejector apparatus 227 is operated so as to perform an ejection step. In the ejection step, the front ends of the unillustrated ejector pins project into the first cavities 234a on the movable mold 234 side, to thereby eject the adhering molded products. Similarly, when the distance between the parting face of the stationary-side intermediate mold 232 and the parting face of the stationary mold 231 becomes a predetermined distance, the unillustrated ejector apparatus is operated so as to perform an ejection step, whereby molded products adhering to the second cavities 231a on the stationary mold 231 side are ejected. The ejected molded products fall down and are received within a receiving container, or is removed and collected by means of a molded-product removal apparatus, which is inserted into the space between the parting face of the movable mold 234 and that of the movable-side intermediate mold 233 and the space between the parting face of the stationary-side intermediate mold 232 and the parting face of the stationary mold 231. Subsequently, the respective mold-closing steps are started again, and the above described operation is repeated.

As described above, in the first operation sequence, the mold closing and mold opening between the movable mold 234 and the movable-side intermediate mold 233 are performed simultaneously with the mold closing and mold opening between the stationary-side intermediate mold 232 and the stationary mold 231. Further, the timings at which the valve gates 242 disposed in the intermediate runners 241 connected to the first cavities 234a and the valve gates 242 disposed in the intermediate runners 241 connected to the second cavities 231a are opened and closed are controlled in such a manner that the charging step and the pressure-holding step for the second cavities 231a are performed in the cooling step for the first cavities 234a, and the respective cooling steps for the first cavities 234a and the second cavities 231a end simultaneously.

Therefore, despite the fact that the capacities of the first cavities 234a are larger than those of the second cavities 231a and the time required for cooling the resin charged into the first cavities 234a is longer than the time required for cooling the resin charged into the second cavities 231a, the mold-opening steps for the first cavities 234a and the second cavities 231a can be started simultaneously. That is, molding suitable for the first cavities 234a which require a long cooling time as a molding condition can be performed, and molding suitable for the second cavities 231a which require a short cooling time as a molding condition can be performed. In addition, it is unnecessary to use a complicated mold such as those used in ordinary stack molding, and is possible to use a molding apparatus having a simple structure. Moreover, molding can be optimally performed in the first cavities 234a and the second cavities 231a which differ in molding conditions, by performing an ordinary molding operation similar to that used in the case where a mold apparatus having a single cavity is used.

Since the charging step and the pressure-holding step for the second cavities 231a are performed after completion of the charging step and the pressure-holding step for the first cavities 234a, it is unnecessary to increase the diameter of the screw or the injection pressure so as to increase the resin charge amount per unit time. That is, a plurality of molded products can be produced simultaneously without increasing the size of the injection apparatus 211 or enhancing the performance of the injection apparatus 211. Moreover, since a plurality of types of molded products can be produced simultaneously by use of a single mold apparatus, many types of molded products can be produced in a reduced space.

Next, a second operation sequence will be described. Descriptions of operations similar to those in the first operation sequence are omitted.

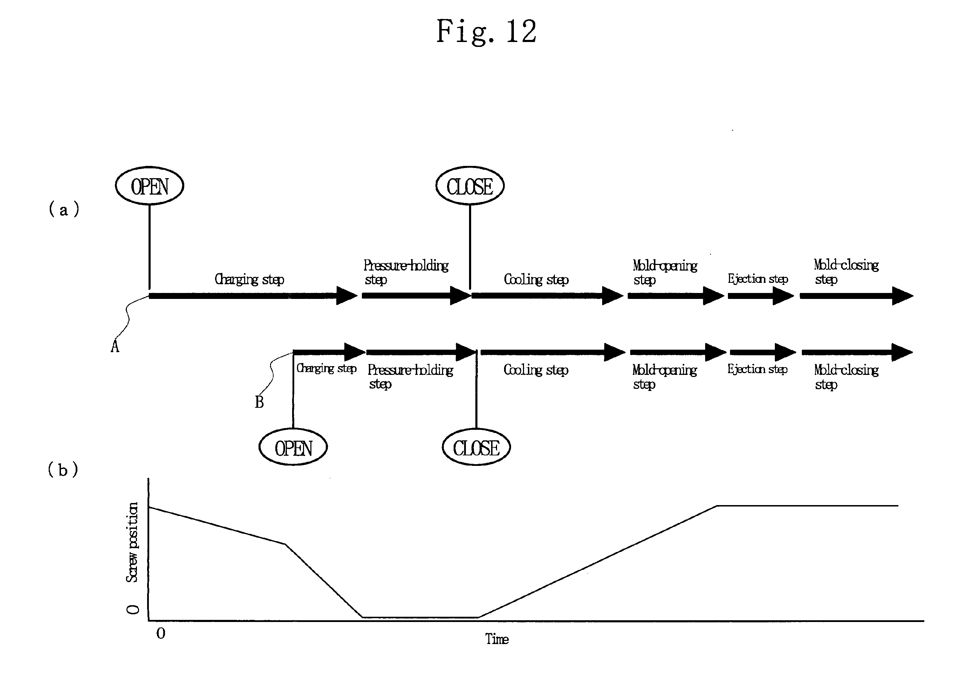

FIG. 12 is a pair of charts showing a second operation sequence of the injection molding machine according to the third embodiment of the present invention.

In the second operation sequence, the injection molding machine operates as shown in FIG. 12. In this case, as in the first operation sequence, the valve gates 242 disposed in the intermediate runners 241 connected to the first cavities 234a open at the time origin, so that a charging step is started at the first cavities 234a. Subsequently, the valve gates 242 disposed in the intermediate runners 241 connected to the second cavities 231a are opened in the middle of the charging step performed at the first cavities 234a, so that a charging step is started at the second cavities 231a.

The timing at which the charging step is started at the second cavities 231a is a point in time when resin has been charged into the first cavities 234a in an amount corresponding to the difference between the capacities of the first cavities 234a and those of the second cavities 231a. That is, the charging step is started at the second cavities 231a when the remaining shot volume of the first cavities 234a becomes equal to the shot volume of the second cavities 231a. Therefore, when the charging step is started at the second cavities 231a, the resin injection amount per unit time of the injection apparatus 211 must be increased. Therefore, speed control is performed so as to increase the advancement speed of the screw, whereby the advancement speed of the screw is increased as shown in FIG. 12(b).

As shown in charts A and B of FIG. 12(a), the charging step at the first cavities 234a and the charging step at the second cavities 231a end generally simultaneously, and respective pressure-holding steps are performed. The injection molding machine is controlled in such a manner that the pressure holding at the small cavities end simultaneously with the pressure holding at the large cavities, so that the pressure-holding step at the first cavities 234a and the pressure-holding step at the second cavities 231a end generally simultaneously. When the pressure-holding steps end, the valve gates 242 disposed in the intermediate runners 241 connected to the first cavities 234a and the valve gates 242 disposed in the intermediate runners 241 connected to the second cavities 231a are closed; and respective cooling steps are performed. Since the operation after this point is identical with that in the first operation sequence, its description is omitted. The pressure-holding steps are not necessarily required to be ended simultaneously, the injection molding machine may be controlled in such a manner that the valve gates are closed in accordance with the size of the corresponding cavities, and the corresponding cooling step is then started.

As described above, in the second operation sequence, the mold closing and mold opening between the movable mold 234 and the movable-side intermediate mold 233 are performed simultaneously with the mold closing and mold opening between the stationary-side intermediate mold 232 and the stationary mold 231. Further, the timings at which the valve gates 242 disposed in the intermediate runners 241 connected to the first cavities 234a and the valve gates 242 disposed in the intermediate runners 241 connected to the second cavities 231a are opened and closed are controlled in such a manner that a charging step is started at the second cavities 231a in the middle of a charging step at the first cavities 234a, and the charging steps at the first cavities 234a and the second cavities 231a end generally simultaneously.

Therefore, even when the first cavities 234a are greater in shot volume than the second cavities 231a, respective charging steps and pressure-holding steps can be ended generally simultaneously, and respective cooling steps and mold-opening steps can be started generally simultaneously. That is, molding suitable for the first cavities 234a which have a large shot volume as a molding condition can be performed, and molding suitable for the second cavities 231a which have a small shot volume as a molding condition can be performed. In addition, molding can be optimally performed in the first cavities 234a and the second cavities 231a which differ in molding conditions, by performing an ordinary molding operation similar to that in the case where a mold apparatus having a single cavity is used.

Since the charging step at the second cavities 231a is started in the middle of the charging step at the first cavities 234a, only required is performing speed control for increasing the advancement speed of the screw, and a plurality of molded products can be produced simultaneously without increasing the size of the injection apparatus 211 or enhancing the performance of the injection apparatus 211. Moreover, since a plurality of types of molded products can be produced simultaneously by use of a single mold apparatus, many types of molded products can be produced in a reduced space.

Next, a third operation sequence will be described. Descriptions of operations similar to those in the first and second operation sequences are omitted.

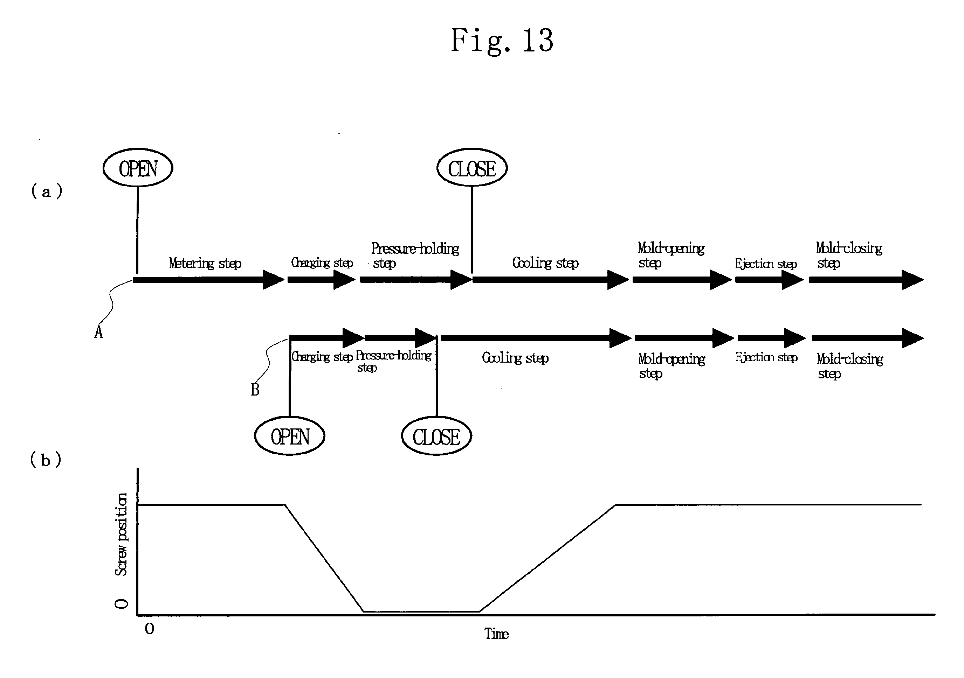

FIG. 13 is a pair of charts showing a third operation sequence of the injection molding machine according to the third embodiment of the present invention.

In the third operation sequence, the injection molding machine operates as shown in FIG. 13. In this case, after completion of a mold-closing step, at the time origin in FIG. 13, the screw is rotated and a metering step is performed in a state in which the valve gates 242 disposed in the intermediate runners 241 connected to the first cavities 234a are opened. Notably, in the metering step, the screw is prevented from retreating. Therefore, as a result of rotation of the screw, resin is pushed out of the injection nozzle 214a to flow into the sprue 240, and is charged into the first cavities 234a via the corresponding intermediate runners 241.

Subsequently, respective charging steps are started when resin is charged into the first cavities 234a in an amount corresponding to the difference between the capacities of the first cavities 234a and those of the second cavities 231a; i.e., when the remaining shot volume of the first cavities 234a becomes equal to the shot volume of the second cavities 231a. Thus, the screw stops its rotation and advances. As a result, the resin is injected from the injection nozzle 214a, and flows into the sprue 240. Further, simultaneously, the valve gates 242 disposed in the intermediate runners 241 connected to the second cavities 231a are opened. Therefore, the resin injected from the injection nozzle 214a is charged into the first cavities 234a and the second cavities 231a via the intermediate runners 241. In this case, speed control for controlling the advancement speed of the screw is performed.

As shown in charts A and B of FIG. 13(a), the charging step at the first cavities 234a and the charging step at the second cavities 231a end generally simultaneously, and respective pressure-holding steps are performed. In this case, the pressure-holding step at the second cavities 231a is first ended, the valve gates 242 disposed in the intermediate runners 241 connected to the second cavities 231a are closed, and a cooling step is performed. Subsequently, the pressure-holding step at the first cavities 234a is ended, the valve gates 242 disposed in the intermediate runners 241 connected to the first cavities 234a are closed, and a cooling step is performed. Subsequently, the cooling step at the first cavities 234a and the cooling step at the second cavities 231a end simultaneously. Since the operation after this point is identical with those in the first and second operation sequences, its description is omitted.

As described above, in the third operation sequence, the mold closing and mold opening between the movable mold 234 and the movable-side intermediate mold 233 are performed simultaneously with the mold closing and mold opening between the stationary-side intermediate mold 232 and the stationary mold 231. Further, the timings at which the valve gates 242 disposed in the intermediate runners 241 connected to the first cavities 234a and the valve gates 242 disposed in the intermediate runners 241 connected to the second cavities 231a are opened and closed are controlled in such a manner that resin is charged into the first cavities 234a in the middle of a metering step, and the charging step at the first cavities 234a and the charging step at the second cavities 231a end generally simultaneously.

Therefore, even when the first cavities 234a are greater in shot volume than the second cavities 231a, respective charging steps can be ended generally simultaneously, and respective pressure-holding steps can be started generally simultaneously. In this case, the pressure-holding step at the first cavities 234a can be made longer than the pressure-holding step at the second cavities 231a. That is, molding suitable for the first cavities 234a which have a large shot volume as a molding condition can be performed, and molding suitable for the second cavities 231a which have a small shot volume as a molding condition can be performed. In addition, molding can be optimally performed in the first cavities 234a and the second cavities 231a which differ in molding conditions, by performing an ordinary molding operation similar to that in the case where a mold apparatus having a single cavity is used.

Since the charging step at the second cavities 231a is started in the middle of the charging step at the first cavities 234a, only required is performing speed control for increasing the advancement speed of the screw, and a plurality of molded products can be produced simultaneously without increasing the size of the injection apparatus 211 or enhancing the performance of the injection apparatus 211. In addition, it is unnecessary to use a complicated mold such as those used in ordinary stack molding, and is possible to use a molding apparatus having a simple structure. Moreover, since a plurality of types of molded products can be produced simultaneously by use of a single mold apparatus, many types of molded products can be produced in a reduced space.

Next, a fourth operation sequence will be described. Descriptions of operations similar to those in the first through third operation sequences are omitted.

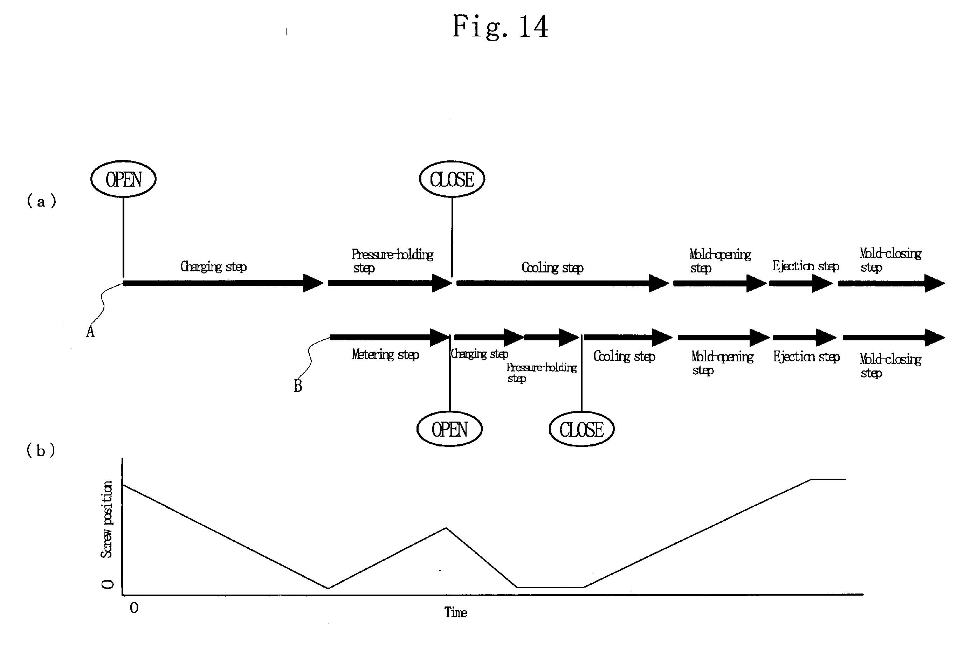

FIG. 14 is a pair of charts showing a fourth operation sequence of the injection molding machine according to the third embodiment of the present invention.

In the fourth operation sequence, the injection molding machine operates as shown in FIG. 14. In this case, as in the first operation sequence, the valve gates 242 disposed in the intermediate runners 241 connected to the first cavities 234a open at the time origin, so that a charging step is started at the first cavities 234a. When resin of a predetermined amount is charged into the first cavities 234a, the charging step is ended, and a pressure-holding step is performed. During the pressure-holding step, in the injection apparatus 211, a metering step is performed; i.e., the screw is rotated so as to measure the resin to be charged into the second cavities 231a.

When the metering step ends, the valve gates 242 disposed in the intermediate runners 241 connected to the second cavities 231a are opened, so that a charging step is started at the second cavities 231a. Simultaneously with this, the valve gates 242 disposed in the intermediate runners 241 connected to the first cavities 234a are closed, and a cooling step is started at the first cavities 234a. In this case, as shown in FIG. 14(b), the screw is advanced again. When the resin of a predetermined amount is charged into the second cavities 231a, the charging step is ended, and a pressure-holding step is performed. Notably, since the capacities of the second cavities 231a are smaller than those of the first cavities 234a, charging is completed within a shorter time, so that the charging step and the pressure-holding step require shorter times. Subsequently, when the pressure-holding step is ended, the valve gates 242 connected to the intermediate runners 241 connected to the second cavities 231a are closed, and a cooling step is performed.

As shown in charts A and B, the cooling step at the first cavities 234a and the cooling step at the second cavities 231a end simultaneously. Since the operation after this point is identical with those in the first through third operation sequences, its description is omitted.

As described above, in the fourth operation sequence, the mold closing and mold opening between the movable mold 234 and the movable-side intermediate mold 233 are performed simultaneously with the mold closing and mold opening between the stationary-side intermediate mold 232 and the stationary mold 231. Further, resin is first charged into the first cavities 234a only; after completion of the charging step at the first cavities 234a, a metering step is performed at the injection apparatus 211 so as to measure the resin to be charged into the second cavities 231a; and the resin is charged into the second cavities 231a only.

Therefore, even when the total short volume of the first cavities 234a and the second cavities 231a is larger than the capacity of the injection apparatus 211 and the metering step must be performed a plurality of times, molding can be performed at the first cavities 234a and the second cavities 231a by means of a molding process of a single cycle. Accordingly, the throughput of the injection molding machine can be improved. In addition, molding suitable for the first cavities 234a which have a long cooling time as a molding condition can be performed, and molding suitable for the second cavities 231a which have a short cooling time as a molding condition can be performed. Moreover, since a plurality of types of molded products can be produced simultaneously by use of a single mold apparatus, many types of molded products can be produced in a reduced space.

Next, a fifth operation sequence will be described. Descriptions of operations similar to those in the first through fourth operation sequences are omitted.

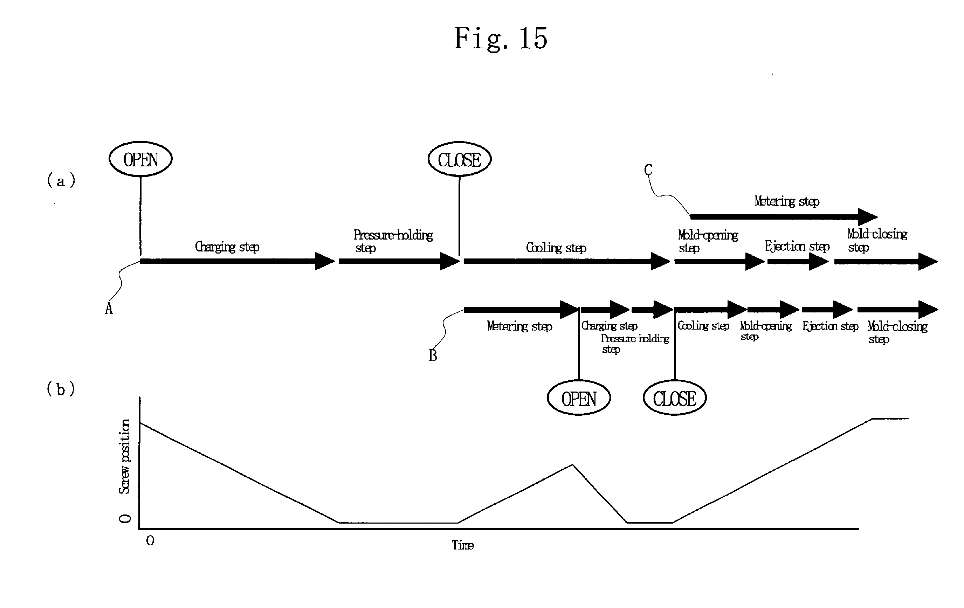

FIG. 15 is a pair of charts showing a fifth operation sequence of the injection molding machine according to the third embodiment of the present invention.

In the fifth operation sequence, the injection molding machine operates as shown in FIG. 15. Notably, chart C shows a portion of steps performed in the injection apparatus 211. In this case, as in the case of the first operation sequence, at the time origin, the valve gates 242 disposed in the intermediate runners 241 connected to the first cavities 234a are opened, and a charging step is started at the first cavities 234a. When a predetermined amount of the resin is charged into the first cavities 234a, the charging step is ended, and a pressure-holding step is performed. Subsequently, upon completion of the pressure-holding step, the above-described valve gates 242 are closed, and a cooling step is performed.

Meanwhile, immediately after the valve gates 242 disposed in the intermediate runners 241 connected to the first cavities 234a are closed, in the injection apparatus 211, a metering step is performed; i.e., the screw is rotated to meter the resin to be charged into the second cavities 231a. After completion of the metering step, the valve gates 242 disposed in the intermediate runners 241 connected to the second cavities 231a are opened, and a charging step is started at the second cavities 231a. In this case, as shown in FIG. 15(b), the screw is advanced again. When a predetermined amount of the resin is charged into the second cavities 231a, the charging step is ended, and a pressure-holding step is performed. Notably, since the second cavities 231a are smaller in capacity than the first cavities 234a, charging is completed within a shorter time, and the charging step and the pressure-holding step require a shorter time. Subsequently upon completion of the pressure-holding step, the valve gates 242 disposed in the intermediate runners 241 connected to the second cavities 231a are closed, and a cooling step is performed at the second cavities 231a.

In the present embodiment, mold closing, mold clamping, and mold opening between the movable mold 234 and the movable-side intermediate mold 233 can be performed independently of mold closing, mold clamping, and mold opening between the stationary-side intermediate mold 232 and the stationary mold 231. Therefore, at the time when the pressure-holding step at the second cavities 231a is ended, the mold-clamping unit 225 is operated so as to separate the parting face of the movable mold 234 from the parting face of the movable-side intermediate mold 233, whereby a mold-opening step is started at the first cavities 234a. Further, immediately after the mold-opening step is started at the first cavities 234a, as shown in chart C, a metering step for the first cavities 234a is started in the injection apparatus 211.

Since the second cavities 231a are small in capacity than the first cavities 234a, the cooling step at the second cavities 231a ends within in a shorter time. Subsequently, the intermediate-member drive apparatuses 236 are operated so as to separate the parting face of the stationary-side intermediate mold 232 from the parting face of the stationary mold 231, whereby a mold-opening step is started at the second cavities 231a. After that, respective mold-opening steps, ejection steps, and mold-closing steps are independently performed at the first cavities 234a and the second cavities 231a.

As described above, in the fifth operation sequence, the mold closing and mold opening between the movable mold 234 and the movable-side intermediate mold 233 and the mold closing and mold opening between the stationary-side intermediate mold 232 and the stationary mold 231 are performed independently of each other at different timings. Further, a charging step and a pressure-holding step are performed at the second cavities 231a during a cooling step performed at the first cavities 234a. After that, respective cooling step, mold-opening steps, ejection steps, and mold-closing steps are independently performed at the first cavities 234a and the second cavities 231a. Therefore, molding suitable for the first cavities 234a, which require a long cooling time as a molding condition can be performed, and molding suitable for the second cavities 231a, which require a short cooling time as a molding condition can be performed.

Further, the injection molding machine is operated in such a manner that resin is first charged into the first cavities 234a only; after completion of the charging step at the first cavities 234a, a metering step is performed at the injection apparatus 211 so as to measure the resin to be charged into the second cavities 231a; and the resin is charged into the second cavities 231a only. Therefore, even when the total short volume of the first and second cavities 234a and 231a is larger than the capacity of the injection apparatus 211 and the metering step must be performed a plurality of times, molding can be performed at the first cavities 234a and the second cavities 231a by means of a molding process of a single cycle. Accordingly, the throughput of the injection molding machine can be improved.

Moreover, the mold opening between the movable mold 234 and the movable-side intermediate mold 233 and the mold opening between the stationary-side intermediate mold 232 and the stationary mold 231 can be performed alternately. Notably, although the drive force of the intermediate-member drive apparatuses 236 is smaller that the drive force of the mold-clamping cylinder 226, the drive force of the intermediate-member drive apparatuses 236 is sufficient for performance of the mold closing, mold clamping, and mold opening between the stationary-side intermediate mold 232 and the stationary mold 231, because the second cavities 231a are small in capacity, and therefore are small in shot volume.

Next, a sixth operation sequence will be described. Descriptions of operations similar to those in the first through fifth operation sequences are omitted.

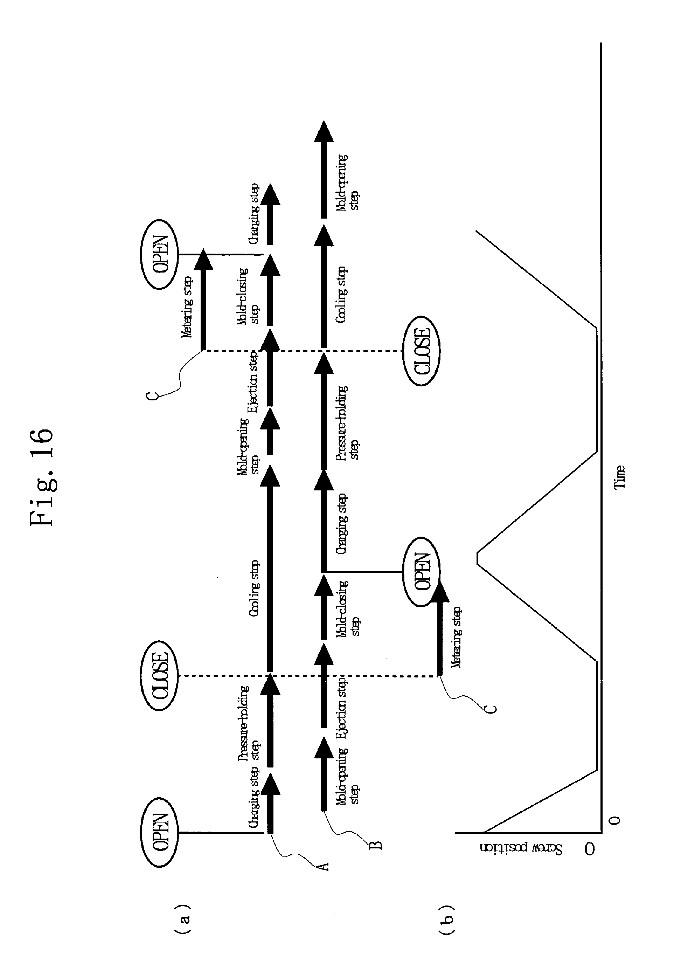

FIG. 16 is a pair of charts showing a sixth operation sequence of the injection molding machine according to the third embodiment of the present invention.

In the sixth operation sequence, the injection molding machine operates as shown in FIG. 16. Here, the capacities of the first cavities 234a and the second cavities 231a are assumed to be large. In this case, in a period in which a cooling step of a previous cycle is performed at the second cavities 231a, the valve gates 242 interposed in the intermediate runners 241 connected to the first cavities 234a are opened, and a charging step is started at the first cavities 234a. When a predetermined amount of the resin is charged into the first cavities 234a, the charging step is ended, and a pressure-holding step is performed. Subsequently, upon completion of the pressure-holding step, the above-described valve gates 242 are closed, and a cooling step is performed.

Meanwhile, at the time when the valve gates 242 interposed in the intermediate runners 241 connected to the first cavities 234a are closed, an ejection step of the previous cycle is being performed at the second cavities 231a. Further, as shown in chart C, immediately after the valve gates 242 interposed in the intermediate runners 241 connected to the first cavities 234a are closed, in the injection apparatus 211, a metering step is performed; i.e., the screw is rotated to meter the resin to be charged into the second cavities 231a. After completion of the metering step, the valve gates 242 disposed in the intermediate runners 241 connected to the second cavities 231a are opened, and a charging step is started at the second cavities 231a. Notably, at the time when the valve gates 242 disposed in the intermediate runners 241 connected to the second cavities 231a are opened, a cooling step is being performed at the first cavities 234a.

Subsequently, when the charging step and the pressure-holding step at the second cavities 231a end, the above-described valve gates 242 are closed, and a cooling step is started. Meanwhile, at the time when the valve gates 242 disposed in the intermediate runners 241 connected to the second cavities 231a are closed, an ejection step is being performed at the first cavities 234a. Further, as shown in chart C, immediately after the valve gates 242 disposed in the intermediate runners 241 connected to the second cavities 231a are closed, in the injection apparatus 211, a metering step is performed; i.e., the screw is rotated to meter the resin to be charged into the first cavities 234a. After completion of the metering step, the valve gates 242 disposed in the intermediate runners 241 connected to the first cavities 234a are opened, and a charging step of the next cycle is started at the first cavities 234a. Notably, at the time when the valve gates 242 disposed in the intermediate runners 241 connected to the first cavities 234a are opened, a cooling step is being performed at the second cavities 231a. After that, the above-described operation is repeated, and respective charging steps, pressure-holding steps, cooling steps, mold-opening steps, ejection steps, and mold-closing steps are independently performed at the first cavities 234a and the second cavities 231a. Further, since resin must be charged into the first cavities 234a when mold opening is being performed at the second cavities 231a, the injection unit drive apparatus 237 must be driven and controlled so as to advance and retreat the injection apparatus 211 in synchronism with advancement and retreat of the second movable platen 222. Here, the intermediate-member drive apparatuses 236 can output a mold clamping force required to form the second cavities 231a.

As described above, in the sixth operation sequence, the mold closing and mold opening between the movable mold 234 and the movable-side intermediate mold 233 and the mold closing and mold opening between the stationary-side intermediate mold 232 and the stationary mold 231 are performed independently of each other at different timings. Further, respective charging steps, pressure-holding steps, cooling steps, mold-opening steps, ejection steps, and mold-closing steps are independently performed at the first cavities 234a and the second cavities 231a; and when the charging step and the pressure-holding step at one side are ended and the metering step is completed at the injection apparatus 211, the charging step at the other side is started. Therefore, it is possible to perform molding suitable for the first cavities 234a and the second cavities 231a; which have a large shot volume as a molding condition.

Even when the total short volume of the first and second cavities 234a and 231a is larger than the capacity of the injection apparatus 211 and the metering step must be performed a plurality of times, molding can be performed at the first cavities 234a and the second cavities 231a by means of a molding process of a single cycle. Accordingly, the throughput of the injection molding machine can be improved.

Moreover, since the mold opening between the movable mold 234 and the movable-side intermediate mold 233 and the mold opening between the stationary-side intermediate mold 232 and the stationary mold 231 can be performed independently of each other, the stroke of mold opening can be shortened, and the overall length of the injection molding machine can be shortened.

As described above, in the present embodiment, the valve gates 242 interposed in the intermediate runners 241 formed in the second movable platen 222 are controlled to be opened and closed; and the mold closing, mold clamping, and mold opening between the movable mold 234 and the movable-side intermediate mold 233 are controlled independently of the mold closing, mold clamping, and mold opening between the stationary-side intermediate mold 232 and the stationary mold 231. Thus, rein is charged into the first cavities 234a and the second cavities 231a, which differ in shot volume, in accordance with the molding conditions of the first cavities 234a and the second cavities 231a. Therefore, optimal molded products can be produced under optimal molding conditions by use of the first cavities 234a and the second cavities 231a, which differ in molding conditions.

Moreover, since the mold opening between the movable mold 234 and the movable-side intermediate mold 233 and the mold opening between the stationary-side intermediate mold 232 and the stationary mold 231 can be performed at different timings, the stroke of mold opening can be shortened, and the overall length of the injection molding machine can be shortened.

Moreover, since a plurality of types of molded products can be produced simultaneously by use of a single mold apparatus, many types of molded products can be produced in a reduced space. Furthermore, a plurality of molded products can be produced simultaneously without increasing the size of the injection apparatus 211 or enhancing the performance of the injection apparatus 211.

Further, a large number of intermediate runners 241 are formed in the second movable platen 222, and the valve gates 242 for opening and closing the intermediate runners 241 are interposed in the intermediate runners 241. Therefore, it is possible to use the second movable platen 222 for general purposes, and attach many types of molds to the second movable platen 222. Moreover, since the valve gates 242 are not required to be disposed within molds, the structure of the molds can be simplified, and many types of molds can be used.

Next, a fourth embodiment of the present invention will be described. Notably, components having the same configurations as those in the first through third embodiments will be denoted by the same reference numerals, and their descriptions are omitted. Further, as to the same operations and effects as those in the first through third embodiments, their descriptions are omitted.

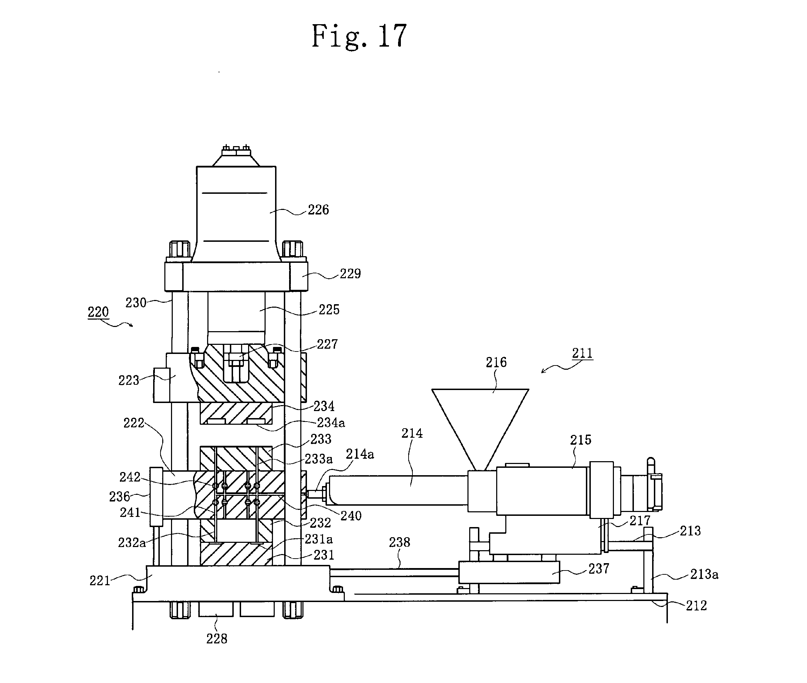

FIG. 17 is a schematic view of an injection molding machine according to the fourth embodiment of the present invention.

In the present embodiment, the mold-clamping apparatus 220 is of a vertical type in which the first and second movable platens 223 and 222 move upward and downward (in the vertical direction) As in the third embodiment, the injection apparatus 211 is of a horizontal type in which the screw move laterally (in the horizontal direction) within the heating cylinder 214. In the mold-clamping apparatus 220, the stationary platen 221, the second movable platen 222, the first movable platen 223, and the support plate 229 are disposed in this sequence from the bottom; and the back surface of the stationary platen 221 is fixed to the molding machine frame 212. Further, an ejector apparatus 228 for ejecting molded products from the second cavities 231a is disposed on the back surface of the stationary platen 221. Notably, the mold-clamping unit 225, the mold-clamping cylinder 226, the ejector apparatus 227, the tie bars 230, the stationary mold 231, the stationary-side intermediate mold 232, and the movable-side intermediate mold 233, the movable mold 234, the intermediate-member drive apparatus 236, etc., have the same configurations as those in the third embodiment, and are attached to the stationary platen 221, the second movable platen 222, the first movable platen 223, and the support plate 229. Further, the first cavities 234a, the second cavities 231a, the intermediate runners 241, the valve gates 242, etc., have the same configurations as those in the third embodiment.

Notably, the second movable platen 222 does not include the snorkel 222a; and the sprue 240 formed in the second movable platen 222 extends laterally in FIG. 17 and has an opening on the side surface of the second movable platen 222 facing the injection apparatus 211. When resin is injected, the injection nozzle 214a is pressed against the opening of the spure 240 on the side surface of the second movable platen 222; that is, nozzle touch is performed. For such purpose, a connection rod 238 whose distal end is connected to the injection unit drive apparatus 237 is attached to the stationary platen 221. Further, the injection unit drive apparatus 237 is interlocked with the intermediate-member drive apparatus 236, so that only when the second movable platen 222 is moved toward the stationary platen 221 by the intermediate-member drive apparatus 236, and the stationary-side intermediate mold 232 and the stationary mold 231 are closed, the injection unit drive apparatus 237 can advance the injection apparatus 211 for nozzle touch. Further, when the stationary-side intermediate mold 232 and the stationary platen 231 are replaced with those having different thicknesses, the vertical.position of the second movable platen 222 in the state in which the stationary-side intermediate mold 232 and the stationary platen 231 are closed changes. Therefore, in order to adjust the vertical position of the injection apparatus 211 in accordance with that of the second movable platen 222, the guide member 213 is attached to the support members 213a such that the vertical position of the guide member 213 can be adjusted.

Since the remaining structural features are the same as those in the third embodiment, their descriptions are omitted. Further, since operation sequences are the same as those in the third embodiment, their descriptions are omitted.

As described above, in the present embodiment, the mold-clamping apparatus 220 is of a vertical type, the overall length of the injection molding machine can be shortened. Therefore, the installation space for the injection molding machine can be reduced, and many types of molded products can be produced in a reduced space.

Next, a fifth embodiment of the present invention will be described. Notably, components having the same configurations as those in the first through fourth embodiments will be denoted by the same reference numerals, and their descriptions are omitted. Further, as to the same operations and effects as those in the first through fourth embodiments, their descriptions are omitted.

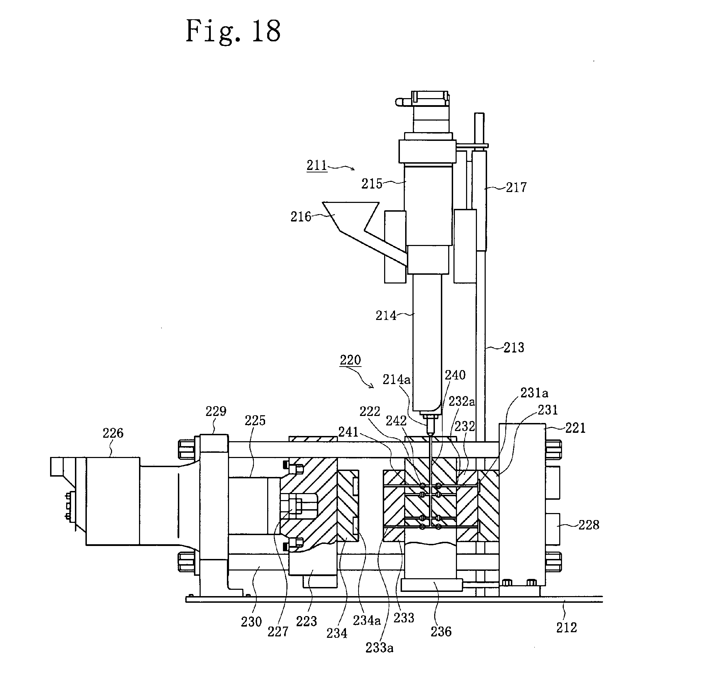

FIG. 18 is a schematic view of an injection molding machine according to the fifth embodiment of the present invention.

In the present embodiment, the injection apparatus 211 is of a vertical type in which the screw moves vertically within the heating cylinder 214. Notably, the mold-clamping apparatus 220 is of a horizontal type in which the first and second movable platens 223 and 222 move horizontally. The guide member 213 extends vertically, and its lower end is fixed to the molding machine frame 212. Further, the injection unit drive apparatus 217 is composed of a rod-less cylinder or the like, and slides vertically along the guide member 213 to thereby move the injection apparatus 211 in the vertical direction.

Notably, although the mold-clamping apparatus 220 is generally identical with that in the third embodiment, the second movable platen 222 have the same configuration as in the fourth embodiment, and the ejector apparatus 228 for ejecting molded products from the second cavities 231a is disposed on the back surface of the stationary platen 221 as in the fourth embodiment.

Like the fourth embodiment, the injection unit drive apparatus 237 is interlocked with the intermediate-member drive apparatus 236, so that only when the second movable platen 222 is moved toward the stationary platen 221 by the intermediate-member drive apparatus 236, and the stationary-side intermediate mold 232 and the stationary mold 231 are closed, the injection unit drive apparatus 217 can advance the injection apparatus 211 for nozzle touch.

Further, the present embodiment may be modified in such a manner that the second movable platen 222 is fixed to the frame as a stationary platen, and the stationary platen 221 is moved such that the stationary platen 221 is advanced and retreated as a second movable platen. In this case, since the second movable platen 222 is fixed to the frame as a stationary platen, even when mold opening is performed, the nozzle-touched state can be maintained.

Since the remaining structural features are the same as those in the third embodiment, their descriptions are omitted. Further, since operation sequences are the same as those in the third embodiment, their descriptions are omitted.

As described above, in the present embodiment, the injection apparatus 211 is of a vertical type, the overall length of the injection molding machine can be shortened. Therefore, the installation space for the injection molding machine can be reduced, and many types of molded products can be produced in a reduced space. Notably, in the present embodiment, the injection apparatus 211 may be of a horizontal type.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to injection molding machines.

## Claims

1. An injection molding machine **characterized by** comprising:
(a) a plurality of cavities formed in a mold apparatus;
(b) resin passages for charging resin into the cavities;
(c) a plurality of selection means respectively disposed in the resin passages corresponding to the cavities and adapted to selectively open and close the corresponding resin passages; and
(d) a controller for controlling the selection means.

2. An injection molding machine according to claim 1,
wherein the controller opens and closes the plurality of selection means in accordance with respective molding conditions of the cavities.

3. An injection molding machine according to claim 2,
wherein the controller controls timings at which the respective selection means are opened and closed, such that charging of resin, or pressure-holding or cooling of the charged resin is completed simultaneously at a cavity having a large shot volume and a cavity having a small shot volume.

4. An injection molding machine according to any one of claims 1 to 3, further comprising:
(a) an injection apparatus for supplying resin, wherein
(b) the injection apparatus meters, in a single metering step, resin to be charged into all the cavities.

5. An injection molding machine according to any one of claims 1 to 3, further comprising:
(a) an injection apparatus for supplying resin, wherein
(b) the injection apparatus meters, in a plurality of metering steps, resin to be charged into all the cavities.

6. An injection molding machine according to any one of claims 1 to 5, wherein
(a) the mold apparatus includes a stationary mold, a movable mold, and an intermediate mold,
(b) the cavities are formed between the intermediate mold and the stationary mold and between the intermediate mold and the movable mold, and
(c) the controller controls the injection molding machine such that mold closing, mold clamping, and mold opening between the intermediate mold and the stationary mold are performed independently of mold closing, mold clamping, and mold opening between the intermediate mold and the movable mold.

7. An injection molding machine according to claim 6,
wherein the mold opening between the intermediate mold and the stationary mold and the mold opening between the intermediate mold and the movable mold are performed alternately.

8. An injection molding machine according to claim 1, further comprising:
(a) a stationary-mold support apparatus;
(b) a first movable-mold support apparatus movable in relation to the stationary-mold support apparatus; and
(c) a second movable-mold support apparatus which is disposed between the stationary-mold support apparatus and the first movable-mold support apparatus and to which are attached corresponding ones of two pairs of mutually facing molds that form cavities.

9. An injection molding machine according to claim 8, further comprising:
(a) a first mold apparatus composed of a pair of molds attached to the stationary-mold support apparatus and the second movable-mold support apparatus, respectively, and
(b) a second mold apparatus composed of a pair of molds attached to the first movable-mold support apparatus and the second movable-mold support apparatus, respectively, wherein (c) mold closing, mold clamping, and mold opening of the first mold apparatus are performed independently of mold closing, mold clamping, and mold opening of the second mold apparatus.

10. An injection molding machine according to claim 8 or 9, further comprising a drive apparatus for the second movable-mold support apparatus which moves the second movable-mold support apparatus independently of the first movable-mold support apparatus.

11. An injection molding machine according to claim 10,
wherein the drive apparatus for the second movable-mold support apparatus is attached to the second movable-mold support apparatus.

12. An injection molding machine according to claim 10,
wherein the drive apparatus for the second movable-mold support apparatus is attached to the stationary-mold support apparatus or the first movable-mold support apparatus.

13. An injection molding machine according to any one of claims 1 to 7, wherein the selection means are disposed in the mold apparatus.

14. An injection molding machine according to claim 6 or 7,
wherein the selection means are disposed at least in the stationary mold or the intermediate mold.

15. An injection molding machine according to any one of claims 8 to 14, wherein the second movable-mold support apparatus moves along tie bars disposed to extend between the stationary-mold support apparatus and the first movable-mold support apparatus.

16. An injection molding machine according to any one of claims 8 to 14, wherein the second movable-mold support apparatus moves along guide means attached to a frame.

17. An injection molding machine according to any one of claims 8 to 16, wherein the second movable-mold support apparatus includes selection means for selecting the resin passages corresponding to the cavities.

18. An injection molding machine according to claim 17,
wherein the selection means are a plurality of shutoff means.

19. An injection molding machine according to claim 18,
wherein the shutoff means are controlled at arbitrary timings.

20. An injection molding machine according to any one of claims 8 to 19, wherein molded products are produced in accordance with the respective molding conditions of the cavities.

21. An injection molding machine according to any one of claims 8 to 20, wherein an ejector apparatus is disposed on the stationary-mold support apparatus and the first movable-mold support.

22. An injection molding method for
(a) producing a first molded product in a first cavity formed between a stationary mold and an intermediate mold and producing a second molded product, which differs in shape from the first molded product, in a second cavity formed between the intermediate mold and a movable mold, the method being **characterized by** comprising:
(b) charging resin into one cavity at a first timing via a resin passage in the intermediate mold;
(c) controlling the resin passage by means of selection means provided within the intermediate mold so as to establish communication between the resin passage and the other cavity; and
(d) charging the resin into the other cavity at a second timing via the resin passage in the intermediate mold.

23. An injection molding method for
(a) producing a first molded product by use of a first mold apparatus disposed between a first movable-mold support apparatus and a second movable-mold support apparatus, and producing a second molded product by use of a second mold apparatus disposed between the second movable-mold support apparatus and a stationary-mold support apparatus, the method being **characterized by** comprising:
(b) charging resin at a first timing into a first cavity formed in the first mold apparatus via a resin passage in the second movable-mold support apparatus; and
(c) charging resin at a second timing into a second cavity formed in the second mold apparatus via the resin passage in the second movable-mold support apparatus.
